(19) **Europäisches Patentamt / European Patent Office / Office européen des brevets**

(11) **EP 2 605 467 B1**

(12) **EUROPEAN PATENT SPECIFICATION**

(45) Date of publication and mention
of the grant of the patent:
**24.07.2019 Bulletin 2019/30**

(51) Int Cl.:
***H04L 29/12*** *(2006.01)*      ***H04W 74/04*** *(2009.01)*

(21) Application number: **11789147.3**

(22) Date of filing: **27.05.2011**

(86) International application number:
**PCT/CN2011/074752**

(87) International publication number:
**WO 2011/150768 (08.12.2011 Gazette 2011/49)**

(54) **A METHOD AND SYSTEM FOR ACCESSING TO NETWORK**

VERFAHREN UND SYSTEM FÜR DEN ZUGANG ZU EINEM NETZWERK

PROCÉDÉ ET SYSTÈME D'ACCÈS À UN RÉSEAU

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **12.08.2010 CN 201010251786**

(43) Date of publication of application:
**19.06.2013 Bulletin 2013/25**

(73) Proprietor: **Huawei Technologies Co., Ltd.
Longgang District
Shenzhen, Guangdong 518129 (CN)**

(72) Inventors:
• **HU, Zhenxing
Guangdong 518129 (CN)**

• **MA, Jie
Guangdong 518129 (CN)**

(74) Representative: **Isarpatent
Patent- und Rechtsanwälte Behnisch Barth
Charles
Hassa Peckmann & Partner mbB
Friedrichstrasse 31
80801 München (DE)**

(56) References cited:
**EP-A1- 1 662 709**     **EP-A2- 1 237 334**
**WO-A2-2005/001619**    **CN-A- 101 079 769**
**CN-A- 101 179 856**    **CN-A- 101 729 568**
**GB-A- 2 419 498**      **US-A1- 2008 025 247**

**Description**

**Field of the Invention**

The present invention relates to communication field, and more particularly, to a method and system for accessing to network.

**Background of the Invention**

In most of the present mobile communication systems, for example in various kinds of wireless communication systems, such as Global System for Mobile Communications (GSM, Global System for Mobile Communications), Wideband Code Division Multiple Access Wireless (WCDMA, Wideband Code Division Multiple Access Wireless), Code Division Multiple Addressing (CDMA, Code Division Multiple Addressing), Worldwide Interoperability for Microwave Access (WiMAX, Worldwide Interoperability for Microwave Access), CDMA2000, TD-SCDMA, Long Term Evolution (LTE, Long Term Evolution) and WLAN/WiFi. The terminal needs to carry out the random access process first, when the terminal initiates uplink service. However, the access collision will be caused when the multiple terminals initiate the random access and choose the same access opportunity and access code at the same time, so that the access to network fails at this time. Access failure will increase access delay and reduce access success rate. In the current communication systems, access resource with more configurations is commonly used, which makes lower probability of access collision to ensure the delay and success rate of access.

With the development of mobile communications, machine to machine (M2M, machine to machine) communication has occurred, M2M and internet of things becomes a hotspot concerned by the operators. Many kinds of applications based on M2M and internet of things (IOT: Internet of Things) develops rapidly. Different from the former human to human (H2H, human to human) communication, the number of terminals of M2M is greater, which may reach to 10 times of H2H or even more, for example, about 50 billion order of magnitude.

Internet of things refers to the application of M2M in wide area network, especially in the mobile operator network, that is, taking the wireless network of mobile network operator as platform, adopting multiple transmitting method (for example CDMA, GSM etc.), serving the wireless data transmitting service of machine to machine through the special trade terminals.

M2M/IOT has a wide application scope, which can be used in many scenarios like intelligent transport, telemedicine, monitoring, smart power grid, environment detection, smart home and so on.

Machine type communication (MTC, Machine Type Communication) refers to the network communication between one or more network element under the circumstance of without people participation (that is, M2M application), for example applications like traffic control and management, factory monitoring, remote meter reading and so on. In M2M applications, multiple M2ME (Machine to Machine Equipment; machine to machine equipment) with same M2M application form an entirety, referred to group (Group).

Machine type communication terminal identity should be able to uniquely identify a M2M terminal, for example, international mobile subscriber identity (IMSI, International Mobile Subscriber Identity), mobile station international ISDN number(MSISDN, Mobile Station International ISDN Number), IP address(IP addr), IP multimedia public identity(IMPU, IP Multimedia Public Identity), IP multimedia private identity (IMPI, IP Multimedia Private Identity) and so on can be adopted as machine type communication terminal identity.

Since the resource of wireless communication is limited, the corresponding time-frequency resource is distributed only when the subscriber needs to communicate with others. When the subscriber initiates communication, the random access process is carried out firstly, then radio resource control (RRC) connection is established and data is transmitted, and, the occupied resource is released finally when the communication is completed. Take LTE as an example, random access resource includes two parts, one is the time slot and frequency of initiating random access, the other is preamble (Preamble). In current cellular wireless communication system, random access is mainly divided into two ways, i.e., contention-based and non-contention-based.

The random access based on non-contention represents that the base station (eNB) inform user equipment (UE, User Equipment) of using particular access resource of its own. Since eNB needs to distribute the access resource, so the system overhead is high. The random access based on non-contention is only used in scenario that has high requirement of time delay, for example handover and call drop.

The random access based on contention, eNB will indicate the access resource information which is allowed to initiates random access by the current cell in the broadcasting message, then UE selects one allowed Preamble randomly, and select random access frequency resource randomly in the next random access moment, and then initiates the random access at the selected random access time-frequency position. Since each UE selects random access frequency resource randomly and independently, collision will occured when multiple UE select the same random access resource. According to the collision resolution of current protocol, at most only one UE among multiple UE with collision can access successfully, other UE need to initiate access attempts again after shrink for a period of time, shrink again when collision occurs again, until access successfully or reach the maximum times of access attempts. The occurrence of collision will extend the access time of the terminal, and bring excessive burden to network and terminal.

But the number of terminals that participate M2M communication is very huge, and the interaction flow of each terminal might be very small, furthermore, the interaction might be gusty, M2M terminal (also can be called as MTC equipment) may perform relatively simple functions, as to execute the specially information transmission interaction, and some M2M terminals have relatively fixed positions or seldom .movement; M2M terminals in special application have consistent behaviors.

In M2M service, the amount of MTC devices is huge, so the access to the network and competition for network resource by large number of MTC devices, will bring excessive burden to the current network, especially in some application scenario, for example intelligent meter reading service.

Take intelligent transport for an example, a typical intelligent transport system includes GPS (global positioning system, Global Positioning System)/GLONASS (Global Navigation Satellite System of Russia) satellite positioning system, mobile vehicular terminal, wireless network and intelligent transport system (ITS, Intelligent Transport Systems) control center. Vehicular terminals receive distance measurement information of navigation satellite network via GPS module, and transmit information of vehicle like longitude, latitude, speed, time and so on to the micro-controller; collect vehicle state information through video image devices; and the micro-controller executes bidirectional information interaction with ITS control center through GPRS module to complete functions like vehicle monitoring and so on.

Take smart power grid for another example, smart power grid requires all the smart power grid terminals to report data periodically, for example, electronic meter reading service. All the terminals of smart power grid report data to a specific server at a specific time. For example, the smart power grids of many countries require large number of MTC devices to transmit uplink meter reading data frequently, for example taking 5 minutes as one period; besides the grids also require data of meter reading data small.

Therefore, in M2M communication, if MTC devices still adopt the random access which is similar to H2H, a great amount of collisions make the access time beyond the acceptable scope. Furthermore, in order to reduce collision probability, a lot of access resources are configured, which will compress the resource occupied by service and reduce the capacity of the system.

US2008/025247A1 discloses a wireless communication infrastructure entity which assigns a plurality of schedulable wireless communication entities to a group wherein each entity is assigned to a location within the group. The infrastructure entity indicates which of the plurality of schedulable wireless communication entities assigned to the group has been assigned a wireless resource using a terminal assignments field.

WO2005/001619A2 discloses a method for determining the location of wireless terminals of a wireless ad-hoc multi-hopping peer-to-peer network deployed in a three-dimensional multi-level structure. The method comprises controlling the terminals to register with a controller of the network; operating the controller to assign a respective sequence number to each of the terminals; and controlling the terminals to base their respective time of transmission of a message on their respective sequence number.

## Summary of the Invention

The object of the present invention is achieved by the features of the appended independent claims.

The present invention provides a method and system for accessing to network, which can reduce the collision probability.

In one aspect, the present invention provides a method for accessing to network, performed by a communication network element, comprising: establishing a group sequence distribution information, wherein the group sequence distribution information comprises a sequence distribution information of each group identity, the sequence distribution information includes a corresponding relationship between the sequence and the terminal identity (terminal ID), and the group identity is an identifier of a terminal group; sending the sequence distribution information or sequence to a terminal, so that the terminal accesses to the network according to the order of the sequence when reporting data; wherein the method further comprises: sending a distributed maximum sequence Nmax and a sequence adjusting step k to the terminal;adjusting the sequence of each terminal of each group to: (S+k) mod Nmax+1 after each data reporting, wherein S represents the original sequence of each terminal, mod represents modulo.

In another aspect, the present invention provides a method for accessing to network, performed by a terminal, comprising: receiving a sequence distribution information sent from the network or a sequence distributed to the terminal by the network, wherein the sequence distribution information includes a corresponding relationship between the sequence and the terminal identity, the sequence distribution information is a sequence distribution information in a group sequence distribution information and the group sequence distribution information comprises a sequence distribution information of each group identity, and the group identity is an identifier of a terminal group; accessing to the network according to the order of the sequence when the terminal reports data; wherein the method further comprises: receiving a distributed maximum sequence Nmax and a sequence adjusting step k sent from the network; adjusting the sequence of the terminal after each data reporting to: (S+k) mod Nmax+1, wherein S represents the original sequence of each terminal, mod represents modulo.

In another aspect, the present invention provides a communication network element, comprising: an establishing unit, configured to establish a group sequence distribution information, wherein the group sequence distribution information comprises a sequence distribution information of each group identity, the sequence distribution information includes a corresponding relationship between the sequence and the terminal identity, and the group identity is an identifier of a terminal group; and a sending unit, configured to send the sequence distribution information or sequence to a terminal, so that the terminal accesses to the network according to the order of the sequence when reporting data; wherein the sending unit is further configured to send a distributed maximum sequence Nmax and a sequence adjusting step k to the terminal; the communication network element further comprises: an adjusting unit, configured to adjust the sequence of each terminal of each group to: (S+k) mod Nmax+1 after each data reporting, wherein S represents the original sequence of each terminal, mod represents modulo.

In another aspect, the present invention provides a terminal, comprising: a receiving unit, configured to receive a sequence distribution information sent from the network or a sequence distributed to the terminal by the network, wherein the

sequence distribution information includes a corresponding relationship between the sequence and the terminal identity, the sequence distribution information is a sequence distribution information in a group sequence distribution information and the group sequence distribution information comprises a sequence distribution information of each group identity, and the group identity is an identifier of a terminal group; and an accessing unit, configured to access to the network according to the order of the sequence when the terminal reports data; wherein the receiving unit is further configured to receive a distributed maximum sequence Nmax and a sequence adjusting step k sent from the network; the terminal further comprises: an adjusting unit, configured to adjust the sequence of the terminal after each data reporting to: (S+k) mod Nmax+1, wherein S represents the original sequence of each terminal, mod represents modulo.

In another aspect, the present invention provides a communication system, comprising a communication network element, wherein the communication network element is configured to establish a sequence distribution information, wherein the sequence distribution information includes a corresponding relationship between the sequence and the terminal identity; and the communication network element is configured to send the sequence distribution information or sequence to a terminal, so that the terminal accesses to the network according to the order of the sequence when reporting data.

According to the technical solution of present invention, the collision probability can be reduced, when terminal accessing to network.

## Brief Description of the Drawings

In order to describe the technical solutions in the embodiments of the present invention more clearly, a brief introduction on the accompanying drawings which are needed in the description of the embodiments or the art are given below. Apparently, the accompanying drawings in the description below are merely some of the embodiments of the present invention, based on which other drawings can be obtained by those skilled in the art without any creative effort.

Figure 1 is a structural diagram of a communication system according to an embodiment of the present invention;

Figure 2 is a structural diagram of a UMTS system according to another embodiment of the present invention;

Figure 3 is a structural diagram of the evolved access network of LTE network;

Figure 4 is a flowchart of accessing to network according to another embodiment of the present invention;

Figure 5 is a flowchart of a method for accessing to network according to another embodiment of the present invention;

Figure 6 is a flowchart of accessing to network according to another embodiment of the present invention;

Figure 7 is a structural diagram of a communication network element 70 according to an embodiment of the present invention;

Figure 8 is another structural diagram of the communication network element 70 according to another embodiment of the present invention;

Figure 9 is a structural diagram of a terminal 90 according to an embodiment of the present invention;

Figure 10 is another structural diagram of the terminal 90 according to another embodiment of the present invention;

Figure 11 is a distribution diagram of a time slot according to another embodiment of the present invention.

## Embodiments of the Invention

In the following description, some concrete details like specified system structure, interface and techniques and so on are provided to make the understanding of the present invention intensive for illustration but no limitation to the present application. However, it should be understood by those skilled in the art that the present invention can also be implemented in other embodiments which have not mentioned concrete details. In other circumstances, the detail instruction of well-known devices, circuits and methods are omitted to prevent unnecessary details for the present invention.

The technical solution of present invention can be use in various kinds of communication systems, for example: GSM, code division multiple access (CDMA, Code Division Multiple Access) system, TD-SCDMA, CDMA2000, WIMAX, wideband code division multiple access wireless (WCDMA, Wideband Code Division Multiple Access Wireless), general packet radio service (GPRS, General Packet Radio Service), long term evolution (LTE, Long Term Evolution) and so on.

The user equipment (UE, User Equipment) can be mobile terminal (Mobile Terminal) or fixed terminal and so on.

MTC terminal device is the terminal adopting M2M communication which may be the terminal used in many scenarios like intelligent transport, telemedicine, monitoring, smart power grid, environment detection, smart home and so on.

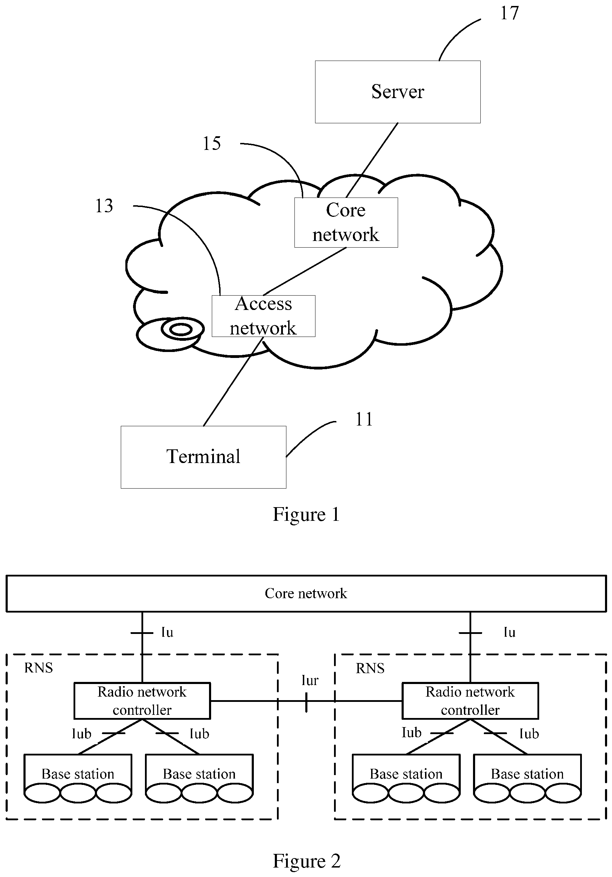

Figure 1 is a structural diagram of a communication system according to an embodiment of the present invention, the communication system mainly including an access network 13, a core network 15 and a server 17.

Specially, the access network 13 and the core network 15 are connected by wired or wireless communication, for example, the access network 13 and the core network 15 are connected via optical fiber. The number of the server 17 can be one or more, the server 17 and the core network 15 are connected by wired or wireless communication, for example, the server 17 and the core network 15 are connected via optical fiber connection. The core network 13 can connect to one or more terminals 11 by wired or wireless communication.

Specially, the server 17 can be MTC server (MTC Server) or other types of servers. The terminals 11 can be any terminals that can be used in communication, for example, mobile phone, terrestrial telephone, computer, MTC terminal device and so on, which are not limited in the present invention. The access network 13 and the core network 15 can be the access network and the core network of communication network of any mode respectively, such as WCDMA, GSM, CDMA or LTE and ,so on, which are not limited in the present invention.

The above mentioned communication systems in different modes are the communication systems adopting different accessing technologies.

For example, when the access network 13 and the core network 15 are the access network and the core network of WCDMA system respectively, the network structure can be shown as Figure 2, which is a structural diagram of a UMTS system according to another embodiment of the present invention, the universal mobile telecommunication system (UMTS, Universal Mobile Telecommunication System),adopting the similar structure to the second generation mobile communication system, is a third generation mobile communication system adopting WDMA air interface technology, so the UMTS system is also called as WCDMA communication system commonly.

The UMTS system includes universal terrestrial radio access network (UTRAN, Universal Terrestrial Radio Access Network), CN and user equipment (User Equipment, UE).

As shown in Figure 2, UTRAN, namely universal terrestrial radio access network, includes one or more radio network subsystems (RNS, Radio Network Subsystem). One RNS includes one radio network controllers (RNC, Radio Network Controller) and one or more base stations (NodeB). The interface between RNC and CN is Iu interface, NobeB and RNC are connected via Iub interface. Inside the UTRAN, radio network controllers (RNC) are connected with each other via Iurs, the Iurs can be connected through the direct physical connection or transport network connection among RNCs. RNC is used to distribute and control the radio resource of NodeB which is connected to or relevant to RNC. NodeB completes the data flow transition between Iub interface and Uu interface, and participate a part of radio resource management at the same time.

NodeB is the base station (namely radio transceiver) of WCDMA system, is connected with RNC via Iub interface, and mainly completes the process of physical layer protocol of Uu interface.

RNC is radio network controller, which is used to control the radio resource of UTRAN, mainly complete the functions of connection establishment and disconnection, switching, macro diversity combining, radio resource management and so on.

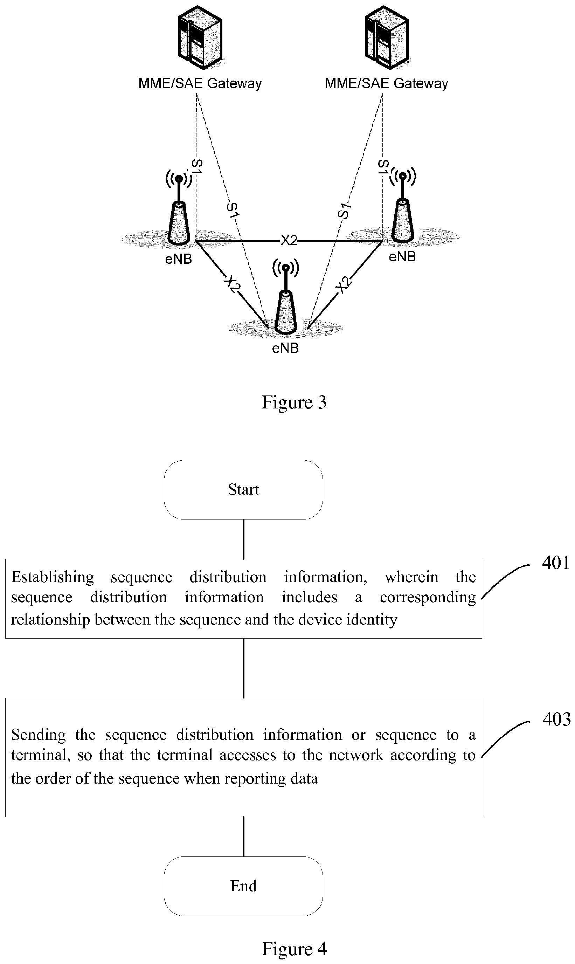

For another example, when the access network 13 and the core network 15 are the access network and the core network of LTE system respectively, the network structure can be shown as Figure 3, which is a network structural diagram of evolved access network (E-UTRAN, Evolved-Universal Terrestrial Radio Access Network) of LTE network, including mobility management entity (Mobility Management Entity, MME)/serving SAE gateway (Serving SAE GW) and eNB.

Specially, the mobility management entity (Mobility Management Entity, MME) is connected to eNB through S1-MME interface, the serving SAE gateway (Serving SAE GW) is connected to eNB through S1-U interface, two eNBs are connected with each other through X2 interface.

Access network mainly includes two parts, evolved eNodeB (eNB) and MME/SAE GW. MME/SAE GW is a boundary node, if MME/SAE GW is considered as a part of core network, the access network is mainly constituted by the eNB layer. The eNB not only has the function of original NodeB, but also is able to complete most of the functions of the original RNC, such as physical layer, MAC layer, RRC, schedule, access control, bearer control, access mobility management and so on. The connection between eNB and eNB uses mesh (Mesh) method.

The above WCDMA, LTE communication systems examples are merely schematically illustration, the present invention is also suitable for other modes of communication networks, which is not limited in the present application.

By combining the structural diagram of the communication system shown in Figure 1, the working process of the communication system can be described as follows.

The access network 13 is configured to establish sequence distribution information, the sequence distribution information includes a corresponding relationship between the sequence (sequence) and the terminal identity (terminal ID); send the sequence distribution information to terminal 11, so that the terminal 11 accesses to the network according to the order of the sequence when reporting data, for example when reporting data periodically.

The server 17 is configured to send group information to access network 13, the group information includes group identity, and the group identity is the identifier of terminal group.

The sequence distribution information can further comprises the reporting period.

For example, in the network system adopting different access technologies, the entities used to establish and send the sequence distribution information may be different, such as the equipments of the access network, or the equipments of the core network, or a single equipment. For example, in WCDMA network, the NodeB or radio network controller (RNC, Radio Network Controller) of the access network can be used to establish the sequence distribution information, and send the sequence distribution information to terminal 11. In another example, the eNodeB or MME or access gateway can be used to establish the sequence distribution information, and send the sequence distribution information to terminal 11. In another example, in GSM system or CDMA system, the base station (BTS, Base Transceiver Station) or the base station controller (BSC, Base Station Controller) can be used to establish the sequence distribution information, and send the sequence distribution information to terminal 11.

But for convenience of description, the following embodiments will take WCDMA system as an example and illustrate, and is applicable to other communication systems also.

Figure 4 is a flowchart of accessing to network according to another embodiment of the present invention.

401, Establishing a sequence distribution information, the sequence distribution information includes a corresponding relationship between the sequence (sequence) and the terminal identity (terminal ID).

In another embodiment of the present invention, the sequence distribution information may further comprise a reporting period.

In the network systems adopting different access technologies, the entities of establishing and sending the sequence distribution information may be different, for example, the equipment of the access network, or the equipment of the core network, or a separate equipment. For example, in WCDMA network, the NodeB or radio network controller (RNC, Radio Network Controller) of the access network establishes the sequence distribution information, and sends the sequence distribution information to terminal 11. In another example, in LTE system, eNodeB or MME or access gateway establishes the sequence distribution information, and sends the sequence distribution information to terminal 11. In another example, in GSM or CDMA system, the base station (BTS, Base Transceiver Station) or base station controller (BSC, Base Station Controller) establishes the sequence distribution information, and sends the sequence distribution information to terminal 11. But for convenience of description, the entities used to establish the sequence distribution information can be called as communication network element.

The sequence distribution information may be established in many ways.

For example, the communication network element is configured with multiple sequences at the initial configuration of the network, the communication network element distributes sequences to all the terminals of the same cell, and establishes the sequence distribution information, for example, the communication network element distributes sequence and establishes the sequence distribution information according to the order of the sequence from smaller to greater, and vice versa. In another embodiment of the present invention, before distributing sequence, the communication network element can also determine if the corresponding sequence distribution information is stored according to the terminal ID, if it is determined that the corresponding sequence distribution information is not stored, the communication network element distributes sequence to the terminal and establishes the sequence distribution information, if it is determined that the corresponding sequence distribution information is stored, it is not necessary for the communication network element to establish the sequence distribution information, while uses the sequence distribution information directly in the following processes.

In another embodiment of the present invention, the sequences can be grouped. The communication network element, such as the NodeB or RNC of the access network, establishes a group sequence distribution information, the group sequence distribution information includes the sequence distribution information of each group identity. In another embodiment of the present invention, the group sequence distribution information can further includes group identity (group ID), the group identity corresponds to multiple sequences, and all the terminals of the same cell correspond to one group identity; or the terminals with the same report service type in the same cell correspond to the same group identity; or the terminals with the same report service type in the same cell correspond to different group identities, for example, the sequence is grouped according to the number of the terminals, which have the same report service type in the same cell, for example, the sequence may be grouped into at least two groups when the number of the terminals which have the same report service type in the same cell is larger than a predetermined value.

For example, the group identity is configured to correspond to multiple sequences, referring to Table 2, one or more group identities can be distributed to one cell, for example, the same group identity is distributed to all the terminals of the cell; or different group identities are distributed to all the terminals of the cell according to the different service types that the terminals need to report. For example, the smart power network terminals of the cell correspond to the first group identity, the transport system terminals of the cell correspond to the second group identity, and so on.

For example, the group identities are configured by the server, the communication network element, such as the access network and NodeB or RNC of the access network, receives the group information sent from the server, the group information includes the group identity, and the group identity is the identifier of the terminal group. The communication network element determines the group that the terminal belongs to, and distributes the sequences corresponding to the group identity, for example, distributes the sequence according to the order of the sequence from small to great, referring to Table 2, and vice versa, then establishes the group sequence distribution information, the group sequence distribution information includes the sequence distribution information of each group identity. In another embodiment of the present invention, the group sequence distribution information can further including group identity (group ID).

In another example, the communication network element receives the type of report service of the terminal, searches for the corresponding group identity, and then distributes, for example according to the order of the sequence, the sequence corresponding to the group identity, and vice versa, then establishes the group sequence distribution information, the group sequence distribution information includes the sequence distribution information of each group identity. In another embodiment of the present invention, the group sequence distribution information can further including group identity (group ID).

In another example, the group identity is reported by the terminals. After receiving the group identity reported by the terminals, the communication network element distributes, for example according to the order of the sequence, the sequence corresponding to the group identity, and vice versa, then establishes the group sequence distribution information, the group sequence distribution information includes the sequence distribution information of each group identity. In another embodiment of the present invention, the group sequence distribution information can further including group identity (group ID).

For example, during the procedure of terminal registration, the core network identifies the group that the terminal belongs to, for example, the core network informs the access network to distribute the sequences to the terminals according to the terminal report service type or the access resource identifying the group that the terminals belong to.

In another embodiment of the present invention, the communication network element, for example, NodeB or RNC of the access network, receives the group identity sent from the terminal; searches that whether the group sequence distribution information corresponding to the group identity is saved; establishes the group sequence distribution information if there is not the group sequence distribution information corresponding to the group identity; uses the sequence distribution information directly in the follow-up process without distributing the sequence if there is the group sequence distribution information corresponding to the group identity.

403, Sending the sequence distribution information or sequence to a terminal, so that the terminal accesses to the network according to the order of the sequence when reporting data.

For example, the access network, like NodeB or RNC of access network, sends the sequence distribution information or sequence to the terminal 11. For example, the access network, like NodeB or RNC of access network, sends the sequence distribution information or sequence carried in the radio recourse control connection setup (RRC CONNECTION SETUP) message, physical channel reconfiguration (PHYSICAL CHANNEL RECONFIGURATION) message, radio bearer reconfiguration (RADIO BEARER RECONFIGURATION) message or MAC header to the terminal.

For example, the access network, like NodeB or RNC of access network, receives the sequence request information sent from the terminal; searches the group sequence distribution information according to the group identity on which the terminal belonged carried in the sequence request information, in order to find the sequence distribution information corresponding to the group identity on which the terminal belonged; sends the searched sequence distribution information or the sequence included in the searched sequence distribution information to the terminal if the group sequence distribution information corresponding to the terminal is saved; adds and distributes sequence to the terminal, and establishes the sequence distribution information of the added sequence, and sends the established sequence distribution information or the added sequence to the terminal if there is not the group sequence distribution information corresponding to the terminal.

For example, the access network, like NodeB or RNC of access network, receives the sequence request information sent from the terminal; determines the group identity of the terminal according to the service type information of the terminal carried in the sequence request information; searches the sequence request information according to the group identity, in order to find the sequence distribution information corresponding to the group identity on which the terminal belonged; sends the searched sequence distribution information or the sequence included in the searched sequence distribution information to the terminal if the group sequence distribution information corresponding to the terminal is saved; adds and distributes sequence to the terminal, and establishes the sequence distribution information of the added sequence, and sends the established sequence distribution information or the added sequence to the terminal if there is not the group sequence distribution information corresponding to the terminal.

For example, the access network, like NodeB or RNC of access network, receives the sequence request information sent from the terminal through the radio recourse control connection request (RRC CONNECTION REQUEST) or the radio recourse control connection setup complete (RRC CONNECTION SETUP COMPLETE).

For example, the access network, like NodeB or RNC of access network, sends the sequence distribution information or sequence carried in the radio recourse control connection setup (RRC CONNECTION SETUP) message, physical channel reconfiguration (PHYSICAL CHANNEL RECONFIGURATION) message, radio bearer reconfiguration (RADIO BEARER RECONFIGURATION) message or MAC header to the terminal.

In another embodiment of the present invention, the access network, like NodeB or RNC of access network, sends a paging message to all the terminals corresponding to the group identity, the paging message includes an access information of all the members of the group, and the access information includes a dedicated access resource of the members of the group and an initial access time point when the dedicated access resource is used.

The dedicated access resource information includes: the number of access channel, each access channel includes available signature sequences and available sub-channel number.

In another embodiment of the present invention, the access network, like NodeB or RNC of access network, sends a paging message to all the terminals corresponding to the group identity, an access resource index is carried by the paging message and indicates a dedicated access resource of the terminal and an initial access time point when the dedicated access resource is used.

In another embodiment of the present invention, the access network, like NodeB or RNC of access network, sends a dedicated access resource of the members of the group and an initial access time point when the dedicated access resource is used to the terminal through a broadcasting message.

In another embodiment of the present invention, the access network, like NodeB or RNC of access network, also sends a pre-configuration information when sending the sequence distribution information or sequence to the terminal, the pre-configuration information carries the dedicated access resource of the members of the group; the access network, like NodeB or RNC of access network, sends a paging message to all the terminals corresponding to the group identity, the paging message carries an access resource index and/or an initial access time point when the dedicated access resource is used, and the access resource index is used to indicate the dedicated access resource of the terminal.

In another embodiment of the present invention, the access network, like NodeB or RNC of access network, sends a distributed maximum sequence Nmax and a sequence adjusting step k to the terminal; and adjusts the sequence of each terminal of each group to: (S+k) mod Nmax+1 after each data reporting (for example, periodic report), S represents the original sequence of each terminal, mod represents modulo.

In another embodiment of the present invention, the access network, like NodeB or RNC of access network, retrieves the sequence corresponding to the terminal in arbitrary reporting period, if the terminal fails to access or fails to report data during the pre-set times of reporting periods, the pre-set times information can be sent to the terminal at the same time when sending sequence distribution information or the sequence, or can be sent to the terminal independently, for example, the pre-set times information can be sent via the paging message; distributes the retrieved sequence to the terminals whose sequence is greater than the retrieved sequence or the terminals that newly enter the cell during a following reporting period of the arbitrary reporting period, for example the next adjacent reporting period.

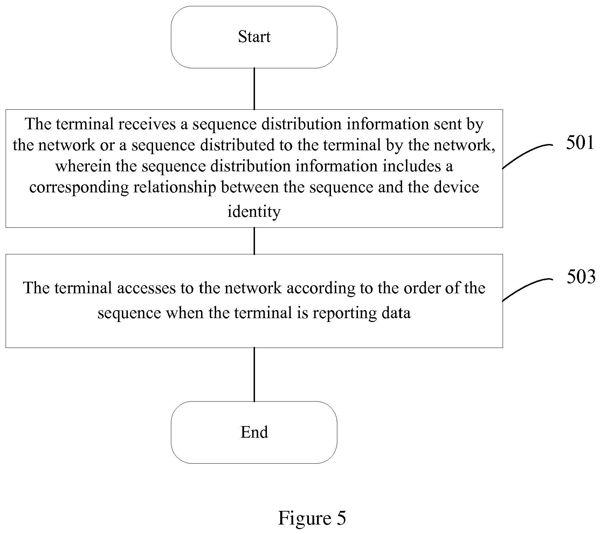

Figure 5 is a flowchart of a method for accessing to network according to another embodiment of the present invention, the method for accessing to network can be described as follows.

501, The terminal receives a sequence distribution information sent from the network or a sequence distributed to the terminal by the network, the sequence distribution information includes a corresponding relationship between the sequence and the terminal identity.

In another embodiment of the present invention, the sequence distribution information can further includes the reporting period.

503, The terminal accesses to the network according to the order of the sequence when the terminal reports data.

For example, the terminal sends a sequence request information to the network, the sequence request information carries a group identity on which the terminal belonged or a service type information; the terminal receives a sequence distribution information corresponding to the group identity on which the terminal belonged which is obtained during the search of group sequence distribution information according to the group identity or the service type information and sent from the network, the group sequence distribution information includes the sequence distribution information of the group identity.

In another embodiment of the present invention, the sequence distribution information can further including the group identity.

The step that that the terminal sends the sequence request information to the network further includes: the terminal sends the radio recourse control connection request (RRC CONNECTION REQUEST) or the radio recourse control connection setup complete (RRC CONNECTION SETUP COMPLETE) information that carries the sequence request information to the network, the sequence request information includes the group identity or access type information.

When the terminal reports data (for example, periodic report), the step of accessing to the network according to the order of the sequence further comprises: receiving a paging message sent from the network for all the terminals of the group identity, the paging message includes the access information of all the members of the group, and the access information includes a dedicated access resource of the members of the group and an initial access time point when the dedicated access resource is used; all the terminals of the group access to the network by using the access information in the order of the sequence of all the terminals of the group,.

When the terminal reports data (for example, periodic report), the step of accessing to the network according to the order of the sequence further comprises: receiving a paging message sent from the network for all the terminals of the group identity, the paging message carries a access resource index, which is used to indicate a dedicated access resource of the terminal and an initial access time point when the dedicated access resource is used; receiving the dedicated access resource of the members of the group and the initial access time point when the dedicated access resource is used sent from the network through a broadcasting message; all the terminals of the group calculate the special access opportunity with the initial access time point when the dedicated access resource is used in the order of the sequence , and access to the network by using the special access opportunity.

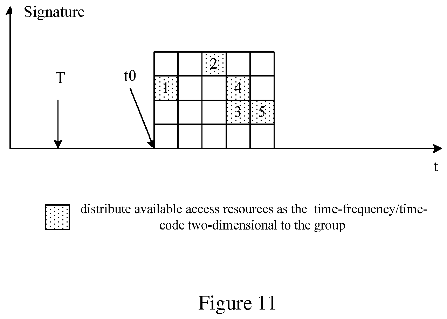

Figure 11 is a distribution diagram of a time slot according to another embodiment of the present invention.

As shown in Figure 11, the horizontal axis represents time t, the vertical axis represents the signature, normally there are 16 values, only 4 was shown in the figure 11; T represents the informed initial access time point t0 when some group in the network is paged, for example the group corresponding to the group identity Group N.

In Figure 11, 5 access resources which can be used in the access of a same group terminals are shown, The sequences of the 5 access resources are 1, 2, 3, 4, 5 and can be distributed to the terminals whose sequences are 1, 2, 3, 4, 5, for example, the terminal whose sequence is 1 in Group N calculates the access opportunity from t0, and initiates access; the terminal whose sequence is 2 in Group N calculates the access opportunity from t0 and initiates access; similarly, other terminals of the group calculate the access opportunity of their own and initiate access, this process need not be repeated here.

In another embodiment of the present invention, the terminal receives a pre-configuration information, the pre-configuration information carries the dedicated access resource of the member of the group; the terminal receives a paging message sent from the network for all the terminals of the group identity, the paging message carries an access resource index and/or an initial access time point when the dedicated access resource is used, and the access resource index is used to indicate a dedicated access resource of the terminal. All the terminals of the group access to the network in the order of the sequence by using the dedicated access resource and the initial access time point when the dedicated access resource is used.

In another embodiment of the present invention, after receiving the paging message, the terminal calculates a terminal access time and an access resource used by the terminal, according to the sequence of the terminal, the dedicated access resource information of the group and the initial access time point when the dedicated access resource is used.

The initial access time point is the beginning time point that the network allowed the terminal group to access, and can be indicated by adopting fixed system frame number (SFN, System Frame Number), or indicated by the time offset of SFN of the paging message. The terminal access time represents the actual time point when terminal accesses to the network.

For example, the dedicated access resource configured for the group is set to include N access channels, the corresponding $n^{th}$ access channel is set to include Kn available access time slots, each access time slot in the corresponding $n^{th}$ access channel is set to include Mn available signatures, each access opportunity is calculated according to the access channels, the access time slots and the signatures, N, M and n are positive integer, and can be arbitrary value between each other. Each access opportunity can be uniquely determined according to the access channels, the access time slots and the signature sequences, and arranged according to the order of the access time slots. For example, the access opportunities with the same access time slot are arranged according to the order of the access channel configuration; and the access opportunities with the same access time slot and the same access cannel, are sequenced according to the order of signature sequence configuration, and the terminal will determine the access opportunity whose sequence is same as the configured SEQ as its own special access opportunity.

For example, the step of calculating a terminal access time and an access resource used by the terminal comprises: calculating the terminal access time and the terminal access opportunity.

Suppose there are k access opportunities in a time period T, access time t is calculated according to the following formula:

$$t = Tstart + floor\frac{SEQn}{k} * T$$

The access resource used by the terminal is obtained by the calculated access opportunity, the access opportunity is calculated according to the following formula:

$$s = 1 + SEQn \bmod k$$

Specially, t represents the terminal access time, s represents the access opportunity, Tstart represents the initial access time point, floor represents the operation of rounding down, SEQn represents the $n^{th}$ sequence distributed to the terminal by the network, mod represents modulo, and SEQn is integer that greater than or equals to zero.

For example, the step of calculating a terminal access time and an access resource used by the terminal comprises: calculate the signature (signature) of terminal accessing and access frame number.

Specially, the access frame number can be calculated according to the following formula:

access frame number=

$$Tstart + floor[\frac{SEQn}{N*K*M} * L] + \{floor[\frac{SEQn \bmod(N*K*M)}{K}], SEQn \bmod(N*K*M) \bmod K\}$$

the signature of accessing can be shown as follows:

$$signature = \{floor[\frac{SEQn \bmod(N*K*M)}{K}], SEQn \bmod(N*K*M) \bmod K\};$$

Specially, K represents K available accessing time slots (acc slots) included in each sub-channel (sub Channel), K is positive integer, for example, K equals to 5; L represents the frame number of sub-channel (sub Channel), L is positive integer, for example, L equals to 8; Tstart represents the initial access time point, floor represents the operation of rounding down, SEQn represents the $n^{th}$ sequence distributed to the terminal by the network, and SEQn is integer that greater than or equals to zero, mod represents modulo, N represents the number of available sub-channel (sub Channel), and N is integer that greater than or equals to zero, M represents available signature.

In another embodiment of the present invention, in an arbitrary reporting period, if a terminal in the cell fails to access within pre-set times of reporting period, the corresponding sequence of the terminal will be retrieved by the network, the pre-set time information can be sent to the terminal at the same time when the sequence distribution information or the sequence is sent, or can be sent to the terminal individually, for example the pre-set time information is sent via the paging message. The terminal updates the sequence if the terminal has saved the sequence; after the terminal receives the sequence distribution information sent from the network or the sequence distributed to the terminal by the network, then the terminal receives and saves the sequence sent from the network if the terminal has not saved the sequence.

Therefore, in the embodiments of the present invention, the collision probability can be reduced by that every terminal access to the network one by one according to the sequence, overmuch access resource is not need to be configured, which can increase the system capacity.

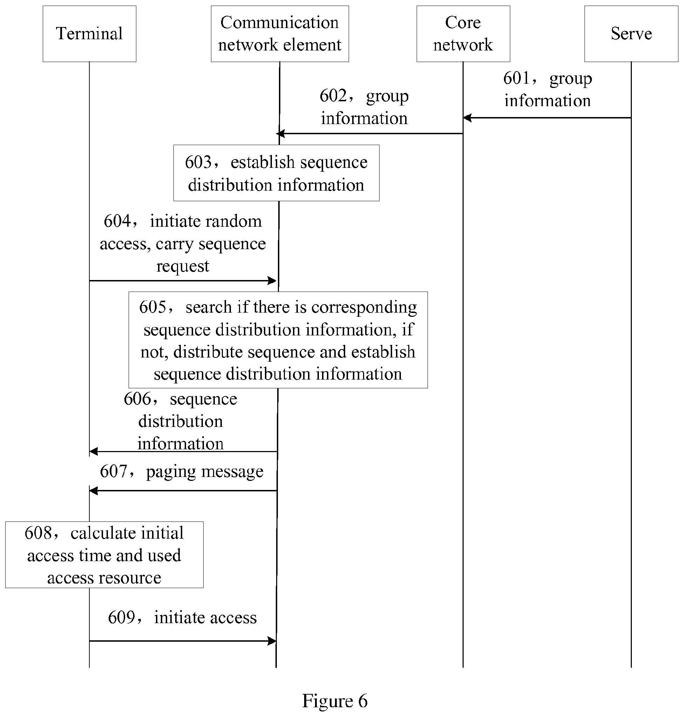

Figure 6 is a flowchart of accessing to network according to another embodiment of the present invention, described as below:

601-602, the server sends the group information to the communication network element through the core network.

The communication network element may be the network element in the access network, or the network element of the core network, or a single equipment. The present invention is not limited to the following examples, but for convenience of describing, the present invention takes the network element of access network for example to illustrate.

In the network systems adopting different access technologies, the names of the access network elements can be different. For example, in WCDMA network, the access network element may be NodeB or radio network controller (RNC, Radio Network Controller). In another example, in LTE system, the access network element may be eNodeB or MME or access gateway. In another example, in GSM or CDMA system, the access network element may be base station (BTS, Base Transceiver Station) or base station controller (BSC, Base Station Controller).

For example, the server may be the MTC server. The MTC server sends an application request message (Application request message) to the core network when the terminal is registering, the application request message carries the group information, for example the group information is carried by the message body of the application request message, and the group information includes the group identity (group ID), furthermore the group information can include the reporting period, the reporting period may be the period of terminal reporting data, or may be the period of terminal accessing to the network, and the group identity is the identifier of the terminal group.

For example, the content of the group information may be shown in Table 1.

Table 1

| Information Element/Group name | Type and reference |
|---|---|
| group ID | Integer(0..15) |
| reporting period | Enumerated(1 minutes, 5 minutes, 30 minutes) |

Specially, group ID represents the group identity, for example, the group ID may be any value from 0 to 15; reporting period represent the reporting period, which is positive integer generally, for example may be 1, 5 ,30 minutes.

603, the communication network element establishes the sequence distribution information.

For example, the communication network element can distribute sequences (sequence) to all the terminals in its management scope, and establishes the sequence distribution information, the sequence distribution information includes a corresponding relationship information between the sequence (sequence) and the terminal identity (terminal identity). In another embodiment of the present invention, the sequence distribution information can further include reporting period.

In another embodiment of the present invention, the communication network element establishes the group sequence distribution information after distributing sequences (sequence) to all the terminals in its management scope, and the group sequence distribution information includes the sequence distribution information of each group identity, the sequence distribution information includes the corresponding relationship information between the sequence and the terminal identity. In another embodiment of the present invention, the group sequence distribution information can further include group identity.

The terminal identity may be any symbol used to uniquely identify the terminal like IMSI, MSISDN, IP addr, IMPU, IMPI and so on, or may be the self-defined identifier.

In the present embodiment, take the communication network element establishing group sequence distribution information as an example to illustrate, for example, the group sequence distribution information may be a group sequence distribution information table as shown in Table 2.

Table 2

| group ID | 1 |
|---|---|
| sequence | terminal ID |
| 1 | $IMSI_1$ |
| 2 | $IMSI_2$ |
| ... | ... |
| n | $IMSI_n$ |

Specially, the group identity (group ID) is 1, the sequence (sequence) distributed by the network element includes 1, 2, ..., n, the terminal ID includes $IMSI_1$, $IMSI_2$, ..., IMSIn, and the sequence are corresponding to the terminal ID.

In the present invention, after receiving the group information sent from the server, the communication element saves the group information and start the reporting period timer.

604, the terminal initiates the random access, carrying the sequence request.

For example, the terminal initiates the random access, the terminal can carry the sequence request through any RRC message. For example, the sequence request information can be carried in the radio resource control connection request (RRC CONNECTION REQUEST), for example, the sequence request information can be carried by adding field to the RRC CONNECTION REQUEST.

In another embodiment of the present invention, the sequence request can also be carried in the radio resource control connection setup complete (RRC CONNECTION SETUP COMPLETE) message.

The sequence request information including the belonged group identify, as shown in Table 3.

Table 3

| Information Element/Group name | Type and reference |
| --- | --- |
| group ID | Integer(0..15) |

Specially, the sequence request information may also be not carried in the radio resource control connection request, the core network or the communication network element informs the communication network element to distribute sequences to the terminals through identifying the group that the UE belongs to. For example, the core network or the communication network element determines which group that the terminal belongs to through the access resource used by the terminal. For example, the sequence request information carries the reporting service type information of the terminal, the core network or the communication network element determines which group that the terminal belongs to through the reporting service type information of the terminal.

In the present embodiment, take radio resource control connection request carrying the sequence request information as an example to illustrate.

605, After receiving the sequence request information, the communication network element searches that whether there is corresponding sequence distribution information, if there is not corresponding sequence distribution information, distributes the sequence and establishes the sequence distribution information.

For example, after receiving the sequence request information, the communication network element searches that whether there is group sequence distribution information corresponding to the group identity stored locally or in other network elements; if the communication network element or other network elements didn't store the group sequence distribution information corresponding to the group identity, the communication network element will distribute the sequence and establish the group sequence distribution information; the group sequence distribution information comprises the sequence distribution information of each group identity. If the communication network element or other network element has stored the group sequence distribution information corresponding to the group identity, the communication network element will find the sequence distribution information corresponding to the group identity that the terminal belongs to.

For example, the sequence distribution information may be stored in form of table, that is the sequence distribution information table. The sequence distribution information may be stored in the sequence distribution information library, the sequence distribution information library may include the sequence distribution information of all the terminals of the same group, and can also report the sequence distribution information of all the terminals of different groups.

For example, the communication network element receives the sequence request information sent from the terminal; the communication network element determines the group identity of the terminal according to the service type information of the terminal carried by the sequence request information; and the communication network element searches the group sequence distribution information according to the group identity in order to find the sequence distribution information corresponding to the group identity that the terminal belongs to.

The group sequence distribution information of each group is maintenance by the communication network element or the other network elements, the group sequence distribution information includes: group number, for example, sequence 1 corresponds to the terminal ID, sequence 1 corresponds to the terminal ID and so on, which is shown in Table 2 specifically.

If some terminal is re-selected to another cell, the sequence may not be distributed. The communication network element obtains the minimum undistributed sequence N of the group, and distributes N to the terminal, and stores the information that sequence N corresponds to the terminal ID.

606, the communication network element sends the searched sequence distribution information or the sequence included in the searched sequence distribution information to the terminal.

For example, the communication network element sends the sequence distribution information or sequence carried in the radio recourse control connection setup (RRC CONNECTION SETUP) message, physical channel reconfiguration (PHYSICAL CHANNEL RECONFIGURATION) message, radio bearer reconfiguration (RADIO BEARER RECONFIGURATION) message or MAC header to the terminal.

The communication network element sends the sequence distribution information or sequence carried in the radio resource control connection setup (RRC CONNECTION SETUP) message to the terminal, for example, the sequence request information or sequence is carried by adding field to the RRC CONNECTION SETUP.

607, the communication network element sends the paging message to all the terminals corresponding to the group identity.

When the period reporting timer corresponding to some group identity reaches the timing, the communication network element sends the paging message to all the terminals corresponding to the group identity. The paging message may be repeated several times in order to ensure that most of the terminals to receive the paging message correctly.

In another embodiment of the present invention, the paging message includes the access information of all the members of the group, the access information includes a dedicated access resource of the members of the group and an initial access time point when the dedicated access resource is used.

In another embodiment of the present invention, the paging message carries the access resource index (index) which is used to indicate a dedicated access resource of the terminal and an initial access time point that the dedicated access resource is used. So that the dedicated access resource and the initial access time point when the dedicated access resource may be transmitted via a broadcasting message.

The communication network element sends the pre-configuration information to the terminal when sending the sequence distribution information or the sequence, the pre-configuration information carries the dedicated access resource of the member of the group; the communication network element sends the paging message to all the terminals of the group identity, the paging message carries the access resource index and/or the initial access time point when the dedicated access resource is used, and the access resource index is used to indicate a dedicated access resource of the terminal

The dedicated access resource information includes the number of the access channels, each access channel includes available signature and available sub-channel number.

The dedicated access resource and the initial access time point when the dedicated access resource is used may be physical random access channel (PRACH, Physical Random Access Channel), as shown in Table 4.

Table 4

| Information Element/ Group name | Need | Multi | Type and reference | Semantics description | Version |
|---|---|---|---|---|---|
| PRACH information | | | | | |
| >Available Signature (available signature) | MP (requ ired) | | Bit string(16) (16bits) | Each bit indicates the availability of signature, wherein the signature may be named from "signature 0" to "signature 15". The bit value 1 represents that the signature is available, the bit value 0 represents that the signature is unavailable, and vice versa. | |
| >Available SF (available spreading factor) | MP | | Integer (integer) (32,64,128 , 256) | | |
| >Preamble scrambling code number (preamble scrambling code number) | MP | | Integer (integer) (0 .. 15) | | |
| >Puncturing Limit (puncturing limit) | MP | | | | |

(continued)

| Information Element/ Group name | Need | Multi | Type and reference | Semantics description | Version |
|---|---|---|---|---|---|
| PRACH information | | | | | |
| >Available Sub Channel Number (available sub-channel number) | MP | | Bit string(12) | Each bit indicates the availability of channel, wherein the channel may named from "subchannel 0" to "subchannel 11 ". The bit value 1 represents that the sub-channel is available, and the bit value 0 represents that the sub-channel is unavailable, and vice versa. | |
| Activation time SFN (activation time or initial access time point) | MP | | Integer (integer) (0.. 4095) | The starting SFN of the PRACH resource being used | |

In the above table, Available Signature (available signature) is transmitted on the Preamble (preamble), there are 16 signatures in total and the terminal knows what these 16 signatures are, so that the communication network element only needs to inform the terminal which signature is available, for example, by the value of the bit, the bit value 1 represents that the signature is available, and the bit value 0 represents that the signature is not available, and vice versa.

The available spreading factor (available SF) is used to determine, after the preamble is confirmed, the minimum allowed spreading factor when sending information.

Preamble scrambling code number (preamble scrambling code number) is used to scramble the preamble, one scramble code corresponds to one access channel.

Puncturing limit (Puncturing Limit) is the input parameter of the puncturing algorithm of the sent information.

Available sub-channel number (Available Sub Channel Number): 12 sub-channels, labeled 0 to 11. As the signature, the terminal knows the content of each sub-channel, so the communication network element needs to indicate which sub-channel is available, for example, by the value of the bit. The bit value 1 represents that the sub-channel is available, and the bit value 0 represents that the sub-channel is not available, and vice versa.

Activation time (Activation time SFN) can also be called as initial access time point, which is used to represent the initial activation time of group reporting, for example, activation time represents the starting SFN of the used PRACH resource.

608, the terminal calculates the terminal access time and the used access resource.

After receiving the paging message, the terminal obtains the dedicated access resource information of the group and the initial access time point Tstart (Activation time SFN) when the dedicated access resource is used, and then calculates the terminal access time and the used access resource according to the sequence SEQn which is obtained from the sequence distribution process.

For example, take WCDMA as an example to illustrate the process of calculating the terminal access time and the used access resource.

| SFN modulo 8 of corresponding P-CCPCH frame (frame number) | Sub-channel number (sub channel number) | | | | | | | | | | | |
|---|---|---|---|---|---|---|---|---|---|---|---|---|
| | 0 | 1 | 2 | 3 | 4 | 5 | 6 | 7 | 8 | 9 | 10 | 11 |
| 0 | 0 | 1 | 2 | 3 | 4 | 5 | 6 | 7 | | | | |
| 1 | 12 | 13 | 14 | | | | | | 8 | 9 | 10 | 11 |
| 2 | | | | 0 | 1 | 2 | 3 | 4 | 5 | 6 | 7 | |
| 3 | 9 | 10 | 11 | 12 | 13 | 14 | | | | | | 8 |
| 4 | 6 | 7 | | | | | 0 | 1 | 2 | 3 | 4 | 5 |
| 5 | | | 8 | 9 | 10 | 11 | 12 | 13 | 14 | | | |
| 6 | 3 | 4 | 5 | 6 | 7 | | | | | 0 | 1 | 2 |
| 7 | | | | | | 8 | 9 | 10 | 11 | 12 | 13 | 14 |

In the above, the sub-channel numbers are 12 in total, including 0 to 11. Since one preamble needs to be sent on one access slot (acc slots), one access slot includes 2 slots (slots), and one slot is one access opportunity, while one frame equals to 10ms, at the same time equals to 15 slots (slots), so one frame can not be divided into integer number of access slots. So 2 frames can be combined to become one frame, that is, including 30 slots (slots), which can be divided into integer number of access slots (i.e., access slots 0 to 14). Two frames definitely include one odd frame and one even frame, for example, the odd frame includes the access slots (acc slots) of number 8 to number 14, the odd frame includes the access slots (acc slots) of number 0 to number 7, which is indicated by each row of the table. Afterwards, some certain dislocation grouping has been taken to define the sub-channel, which is indicated by each column of the table.

The division of the access slots (acc slots) contained by the odd frame or the even frame is arbitrary, the present invention is not limited. Preferably, the access slots (acc slots) contained by the odd frame or the even frame are basically similar.

The terminal calculates the access time and the used access resource in many ways, for example, the terminal calculates the access signature and the access frame number.

For example, the dedicated access resource configured for the group is set to include N access channels, the corresponding $n^{th}$ access channel is set to include Kn available access time slots, each access time slot in the corresponding $n^{th}$ access channel is set to include Mn available signature sequences. Each access opportunity is calculated according to the access channels, the access time slots and the signatures, herein N, M and n are positive integer, and may be an arbitrary value between each other. Each access opportunity may be uniquely determined according to the access channels, the access time slots and the signature sequences. The access opportunities are arranged according to the order of the access time slots. For example, for the access opportunities with the same access time slot, the access opportunities are arranged according to the order of the access channel configuration. For the access opportunities with the same cannel as well as the same access time slot, the access opportunities are arranged according to the order of signature configuration. The terminal will determine the access opportunity which has the same ordinal position to the configured SEQ number as the special access opportunities of its own.

For example, the step of calculating a terminal access time and an access resource used by the terminal comprises: calculating the terminal access time and the terminal access opportunity.

Suppose there are k access opportunities in a time period T, access time t is calculated according to the following formula:

$$t = Tstart + floor\frac{SEQn}{k} * T$$

The access resource used by the terminal is obtained by calculating the access opportunity, the access opportunity is calculated according to the following formula:

$$s = 1 + SEQn \bmod k$$

wherein, t represents the terminal access time, s represents the access opportunity, Tstart represents the initial access time point, floor represents rounding down, SEQn represents the $n^{th}$ sequence distributed to the terminal by the network, mod represents modulo, and SEQn is integer that greater than or equals to zero.

609, the terminal initiates access.

The terminal initiates the non-contention access by using the calculated signature at the calculated terminal access time, the initial power of preamble is set to be the power of the last successful access. If successfully accessing to the network, the terminal executes the follow-up procedure of link establishing and data sending, if unsuccessfully accessing to the network, for example the terminal fails to access once, the terminal can switch into common terminal state immediately or after a period of time, and executes the common random contention access.

In another embodiment of the present invention, when the terminal receives paging message and initiates non-contention access, the preamble power can also be the initial preamble power carried in the broadcasting message, or the power offset of the initial preamble power carried in the broadcasting message or group paging message, the terminal sends the preambles in sequence.

In another embodiment of the present invention, it is also available to carry the preamble power rising value in the paging message, or to execute power rising by the terminal, and to send the preamble which has higher power.

In another embodiment of the present invention, if the non-contention access of the terminal is failed, the communication network element can also initiate independent paging to the terminal, and carry the dedicated access resource, afterwards the terminal continues the non-contention access.

According to the above description, it can be known that each terminal accesses to the network based on the sequence, so the collision probability can be reduced.

If the terminal carries out the operations of power down and power up, reset, cell reselection and so on, the communication network element needs to execute sequence redistribution procedure, for example, the terminal firstly execute cell selection, then the terminal determines if the group sequence of the cell is saved, if the group sequence of the cell is saved, the terminal still uses the saved sequence, if the group sequence of the cell is not saved, the terminal will apply new sequence from the cell and execute the sequence distribution process, the detailed process has been described above, and the description will be omitted herein.

In arbitrary reporting period, the communication network element can also execute the sequence retrieving process, for example, the communication network element retrieves the sequence corresponding to the terminal if the terminal fails to access or fails to report data during the pre-set times of reporting periods, the pre-set times information may be sent to the terminal at the same time when sending sequence distribution information or the sequence, or the pre-set times information may be sent to the terminal independently, for example, the pre-set times information is sent via the paging message, and that the communication network element retrieves the sequence corresponding to the terminal represents to delete the corresponding relationship between the sequence and the terminal ID. During the following reporting period of the arbitrary reporting period, for example the next adjacent reporting period, the communication network element distributes the retrieved sequences to the terminals whose sequence is greater than the retrieved sequence or the terminals that newly enter the cell.

After terminal K received new sequence information, the original sequence is replaced with the new sequence which is used to execute the follow-up data reporting (for example, period reporting) process.

In another embodiment of the present invention, if the group sequence distribution information only includes the distributed maximum sequence, the sequence retrieving and redistribution process will not be executed.

In another embodiment of the present invention, in order to realize fairness reporting, the sequence can be adjusted, for example the communication network element sends a distributed maximum sequence Nmax and a sequence adjusting step k to the terminal; and adjusts the sequence of each terminal of each group to: (S+k) mod Nmax+1 after each data reporting (for example, period reporting), S represents the original sequence of each terminal, mod represents modulo. After the terminal reporting is completed (for example, successfully of unsuccessfully), the communication network element executes sequence adjustment, and adjusts the sequence to: (S+k) mod Nmax+1, S represents the original sequence of each terminal, mod represents modulo.

In another embodiment of the present invention, the terminal executes sequence adjustment as well, for example the terminal receives a distributed maximum sequence Nmax and a sequence adjusting step k sent from the network; and adjusts the sequence to: (S+k) mod Nmax+1 after each data reporting (for example, period reporting) is completed, S represents the original sequence of each terminal, mod represents modulo.

In another embodiment of the present invention, the core network can not inform the communication network element with the group ID, and just require the terminal to have the group ID, the communication network element searches that whether the terminal has the group sequence distribution information according to the group ID information in the RRC message sent from the terminal, if the terminal does not have the group sequence distribution information, the communication network element will distributes the sequence and establishes the group sequence distribution information to the terminal.

In another embodiment of the present invention, the initial access time point can be sent in the broadcasting message.

In another embodiment of the present invention, the allowed continuous report number of times N can also be carried by broadcasting or paging message, at present if N times continuous access failure occurs in the terminal, the sequence become invalid, so the terminal executes the sequence maintenance process, initiates cell reselection, reapplies sequence, the step of reapplying sequence can be the pre-described sequence redistribution process, which will not be repeated here. The communication network element also executes the sequence retrieving process, which is described above and will not be repeated herein.

Therefore, in the embodiments of the present invention, the collision probability may be reduced by that each terminal accessrd to the network one by one according to the sequence, overmuch access resource is not need to be configured, which can increase the system capacity.

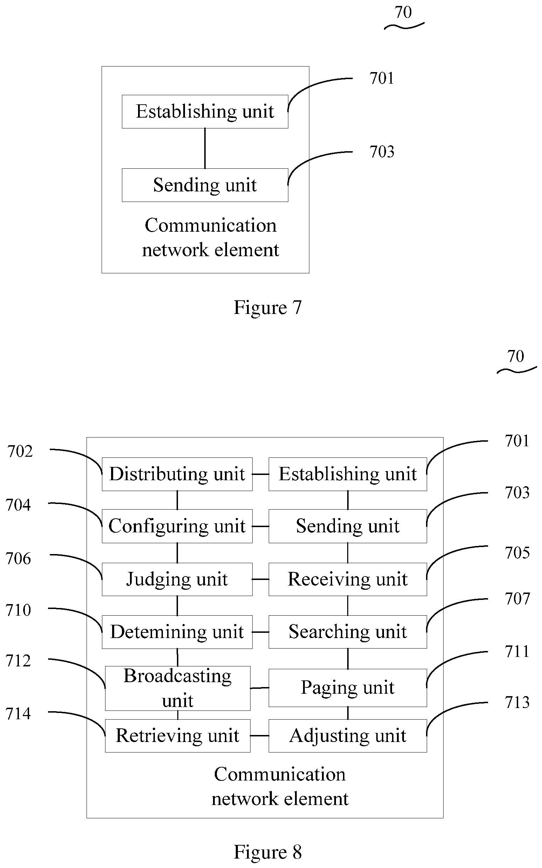

Figure 7 is a structural diagram of a communication network element 70 according to an embodiment of the present invention, the communication network element 70 comprises an establishing unit 701 and a sending unit 703.

The communication network element 70 may be the equipment in the access network, or may be the equipment in the core network, or can also be a single equipment. For example, the communication network element 70 can be the NodeB or radio network controller (RNC, Radio Network Controller) in WCDMA access network. In another example, the communication network element 70 can be eNodeB or MME or access gateway of LTE system. In another example, the communication network element 70 can be the base station (BTS, Base Transceiver Station) or base station controller of GSM or CDMA system, the present invention is not limited by the above examples.

The establishing unit 701, configured to establish the sequence distribution information, the sequence distribution information includes a corresponding relationship between the sequence and the terminal identity;

The sending unit 703, configured to send the sequence distribution information or sequence to a terminal, so that the terminal accesses into the network according to the order of the sequence when reporting data (for example, period reporting).

The terminal may be the mobile terminal (Mobile Terminal) or fixed terminal and so on, or can be the MTC terminal device. The MTC terminal device represents the terminals adopting M2M communication, for example the terminals which may be used in many scenarios like intelligent transport, telemedicine, monitoring, smart power grid, environment detection, smart home and so on.

In another embodiment of the present invention, figure 8 is another structural diagram of the communication network element 70 according to another embodiment of the present invention, the communication network element 70 further comprises a distributing unit 702, a configuring unit 704, a receiving unit 705, a judging unit 706, a searching unit 707.

It should be understood by those skilled in the art that, the figures only show the logical construction and connection relationship between units. The present invention can combine two units into one unit, or configure the unit to other network elements according to the actual requirement, and other connection relationship can also exist.

For example, when the communication network element 70 executing the network initial configuration, the configuring unit 704 is configured to configure multiple sequences and store them, and for all the terminals of the same cell, the distributing unit 702 is configured to distribute the sequences, for example, the distributing unit 702 is configured to distribute the sequences according to the order of the sequences from small to great, and vice versa. The establishing unit 701 is configured to establish the sequence distribution information according to the sequence distributed by the distribution unit 702. In another embodiment of the present invention, before distributing sequence, the judging unit 706 can determine if the corresponding sequence distribution information is stored in the configuring unit 704 according to the terminal ID, if not stored, the distributing unit 702 distributes sequence to the terminal, if stored, the sequence distribution information is not needed to be established, and can be used directly in the follow-up process.

In another embodiment of the present invention, the sequence can be grouped. The establishing unit 701 is further configured to establish group sequence distribution information, the group sequence distribution information includes the sequence distribution information of each group identity, the group sequence distribution information can be shown as in Table 2, and need not be repeated herein. In another embodiment of the present invention, the group sequence distribution information further includes group identity (group ID), the group identity corresponds to multiple sequences, and all the terminals of the same cell correspond to one group identity or all the terminals which have the same reporting service type of the same cell correspond to the same group identity.

For example, the server configures the group identity, the group identity corresponds to multiple sequences, one of more than one group identities may be distributed to one cell, for example, the distributing unit 702 is configured to distribute one same group identity to all the terminals of the cell; the distributing unit 702 can also distributes different group identities to all the terminals of the cell according to the different service types that the terminals need to report. For example, the smart power network terminals of the cell correspond to the first group identity, the transport system terminals of the cell correspond to the second group identity, and so on.

For example, the group identity is configured by the server, the communication network element, for example the receiving unit 705, is configured to receive the group information sent from the server. The group information includes the group identity, and the group identity is the identifier of the terminal group. The judging unit 706 is configured to determine the group that the terminal belongs to, and the distributing unit 702 is configured to distribute the sequence corresponding to the group identity, for example, according to the order of the sequence from small to great, and vice versa. Then the establishing unit 701 is configured to establish the group sequence distribution information, the group sequence distribution information includes the sequence distribution information of each group identity. In another embodiment of the present invention, the group sequence distribution information can further include group identity (group ID).

In another example, the receiving unit 705 is configured to receive the service type information reported by the terminal, the searching unit 707 is configured to search for the corresponding group identity according to the service type information, the distributing unit 702 is configured to distribute, the sequence corresponding to the group identity according to the order of the sequence, and vice versa. Then the establishing unit 701 is configured to establish the group sequence distribution information, the group sequence distribution information includes the sequence distribution information of each group identity. In another embodiment of the present invention, the group sequence distribution information can further include group identity (group ID).

In another example, the group identity is reported by the terminals. After the receiving unit 705 receives the group identity reported by the terminals, the distributing unit 702 is configured to distribute the sequence corresponding to the group identity for example according to the order of the sequence from small to great, and vice versa. Then the establishing unit 701 is configured to establish the group sequence distribution information, the group sequence distribution information includes the sequence distribution information of each group identity. In another embodiment of the present invention, the group sequence distribution information can further include group identity (group ID).

For example, during the procedure of terminal registration, the judging unit 706 is configured to identify the group that the terminal belongs to, for example, the judging unit 706 is configured to inform the distributing unit 702 to distribute the sequence to the terminal according to the terminal report service type or the access resource determining the group that the terminals belongs to.

In another embodiment of the present invention, the receiving unit 705 is configured to receive the group identity sent from the terminal; the searching unit 707 is configured to search that whether the group sequence distribution information corresponding to the group identity is saved in the distributing unit 704; the establishing unit 701 is configured to determine whether to establish the group sequence distribution information according to the searching result of the searching unit 707. If there is not the group sequence distribution information corresponding to the group identity, the distributing unit 702 is configured to distribute the sequence corresponding to the group identity, for example, according to the order of the sequence from small to great, and vice versa, and then the establishing unit 701 is configured to establish the group sequence distribution information. If there is the group sequence distribution information corresponding to the group identity, then the sequence will not be distributed, and the searched sequence distribution information can be used directly in the follow-up process.

For example, the receiving unit 705 is configured to receive the radio resource control connection request (RRC CONNECTION REQUEST) sent from the terminal, the radio resource control connection request carries the sequence request information.

During the procedure of terminal registration, the core network is used to identify the group that the terminal belongs to, and to inform the communication network element 70 to distribute sequence to the terminal.

The group identity corresponds to multiple sequences, and all the terminals of the same cell correspond to one group identity, or the terminals with the same report service type in the same cell correspond to the same group identity.

In another embodiment of the present invention, the receiving unit 705 is configured to receive a sequence request information sent from the terminal; the searching unit 707 is configured to search the group sequence distribution information according to the group identity on which the terminal belonged carried in the sequence request information, in order to find the sequence distribution information corresponding to the group identity on which the terminal belonged; the sending unit 703 is configured to send the searched sequence distribution information or the sequences included in the searched sequence distribution information to the terminal.

In another embodiment of the present invention, the communication network element 70 further comprises a determining unit 710. The receiving unit 705 is configured to receive the sequence request information sent from the terminal; the determining unit 710 is configured to determine the group identity of the terminal according to the service type information of the terminal carried in the sequence request information; the searching unit 707 is configured to search the sequence request information according to the group identity, in order to find the sequence distribution information corresponding to the group identity on which the terminal belonged; the sending unit 703 is configured to send the searched sequence distribution information or the sequence included in the searched sequence distribution information to the terminal.

For example, the sending unit 703 is configured to send the sequence distribution information or sequence carried in the radio recourse control connection setup (RRC CONNECTION SETUP) message, physical channel reconfiguration (PHYSICAL CHANNEL RECONFIGURATION) message, radio bearer reconfiguration (RADIO BEARER RECONFIGURATION) message or MAC header to the terminal.

In another embodiment of the present invention, the communication network element 70 further comprising a paging unit 711, the paging unit 711 is configured to send a paging message to all the terminals corresponding to the group identity, the paging message includes an access information of all the members of the group, the access information includes a dedicated access resource of the members of the group and an initial access time point when the dedicated access resource is used.

In another embodiment of the present invention, the communication network element 70 further comprises a broadcasting unit 712. The paging unit 711 is configured to send a paging message to all the terminals corresponding to the group identity, an access resource index is carried by the paging message and indicates a dedicated access resource of the terminal and an initial access time point when the dedicated access resource is used; the broadcasting unit 712 is configured to send a dedicated access resource of the members of the group and an initial access time point when the dedicated access resource is used to the terminal through a broadcasting message.

In another embodiment of the present invention, the sending unit 703 is further configured to send a pre-configuration information to the terminal , for example, when sending the sequence distribution information or sequence to the terminal. The pre-configuration information carries the dedicated access resource of the members of the group; the paging unit 711 is configured to send a paging message to all the terminals corresponding to the group identity, the paging message carries an access resource index and/or an initial access time point when the dedicated access resource is used, the access resource index is used to indicate the dedicated access resource of the terminal.

In another embodiment of the present invention, the communication network element 70 further comprises a adjusting unit 713, the sending unit 703 is configured to send a distributed maximum sequence Nmax and a sequence adjusting step k to the terminal; the adjusting unit 713 is configured to adjust the sequence of each terminal of each group to: (S+k) mod Nmax+1 after each data reporting (for example, period reporting), S represents the original sequence of each terminal, mod represents modulo.

In another embodiment of the present invention, the communication network element 70 further comprising a retrieving unit 714, the retrieving unit 714 is configured to retrieve the sequence corresponding to the terminal in arbitrary reporting period, if the terminal fails to access or fails to report data during the pre-set times of reporting periods; during the following reporting period of the arbitrary reporting period, for example the next adjacent reporting period, the distributing unit 702 is configured to distribute the retrieved sequence to the terminals whose sequence is greater than the retrieved sequence or the terminals that newly enter the cell during a following reporting period of the arbitrary reporting period.

The detailed working process and function of each unit of the communication network element 70, can be referred to the specific process of the method embodiments described above, and will not be repeated herein.

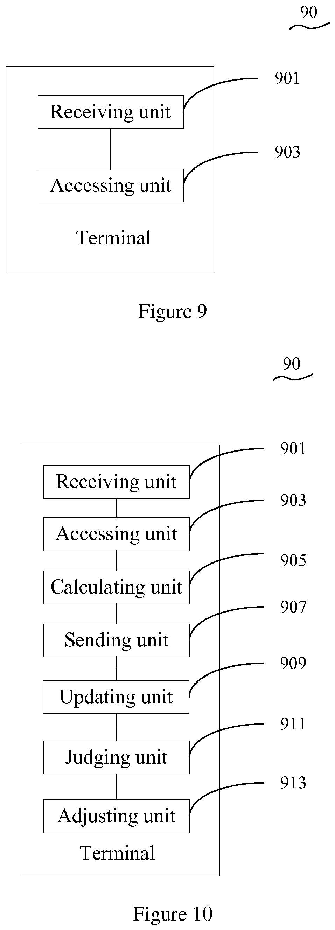

In another embodiment of the present invention, a terminal is provided, for example, figure 9 is a structural diagram of a terminal 90 according to an embodiment of the present invention, the terminal 90 may be mobile terminal or fixed terminal, for example may be the MTC terminal device, that is the terminals which may be used in many scenarios like intelligent transport, telemedicine, monitoring, smart power grid, environment detection, smart home and so on.

The terminal 90 comprises a receiving unit 901 and an accessing unit 903.

The receiving unit 901 is configured to receive sequence the distribution information sent from the network or a sequence distributed to the terminal by the network, the sequence distribution information includes the corresponding relationship between the sequence and the terminal identity.

The accessing unit 903 is configured to access to the network according to the order of the sequence when the terminal reports data (for example, period reporting).

The receiving unit is further configured to receive the paging message sent from the network for all the terminals of the group identity, the paging message includes the access information of all the members of the group, the access information includes a dedicated access resource of the members of the group and an initial access time point when the dedicated access resource is used.

In another embodiment of the present invention, the receiving unit 901 is further configured to receive a paging message sent from the network for all the terminals of the group identity, the paging message carries a access resource index, which is used to indicate a dedicated access resource of the terminal and an initial access time point when the dedicated access resource is used; and to receive the dedicated access resource of the members of the group and the initial access time point when the dedicated access resource is used, and the dedicated access resource and the initial access time point are sent from the network through a broadcasting message.

In another embodiment of the present invention, the receiving unit 901 is further configured to receive a pre-configuration information, the pre-configuration information carries the dedicated access resource of the member of the group; and receive a paging message sent from the network for all the terminals of the group identity, the paging message carries an access resource index and/or an initial access time point when the dedicated access resource is used, the access resource index is used to indicate a dedicated access resource of the terminal.

In another embodiment of the present invention, figure 10 is another structural diagram of the terminal 90 according to another embodiment of the present invention, the terminal 90 further comprises a calculating unit 905 and a sending unit 907.

The calculating unit 905 is configured to calculate a terminal access time and an access resource used by the terminal according to the sequence of the terminal, the dedicated access resource information of the group and the initial access time point when the dedicated access resource is used.

The sending unit 907 is configured to send the sequence request information to the network, the sequence request information carries the group identity on which the terminal belonged or service type information; for example, the sending unit 907 is configured to send the radio recourse control connection request (RRC CONNECTION REQUEST) to the network, the radio recourse control connection request carries the sequence request information, the sequence request information includes the group identity.

In another embodiment of the present invention, the receiving unit 901 is further configured to receive the sequence distribution information, corresponding to the group identity on which the terminal belonged, which is obtained and sent from the network through searching the group sequence distribution information according to the group identity or service type information. The group sequence distribution information includes the sequence distribution information of the group identity.

In another embodiment of the present invention, the receiving unit 901 is further configured to receive the paging message sent from the network for all the terminals of the group identity, the paging message includes the access information of all the members of the group, and the access information includes a dedicated access resource of the members of the group and an initial access time point when the dedicated access resource is used;

The accessing unit 903 is further configured to access to the network through using the access information in the order of the sequence.

For example, the receiving unit 901 is configured to receive the paging message sent from the network for all the terminals of the group identity, the paging message carries a access resource index, which is used to indicate the dedicated access resource of the terminal and the initial access time point that the dedicated access resource being used; and to receive the dedicated access resource of the member of the group and the initial access time point when the dedicated access resource is used, the dedicated access resource and the initial access time point are sent from the network via broadcasting message; the accessing unit 903 is configured to access to the network by using the dedicated access resource and the initial access time point when the dedicated access resource is used in the order of the sequence.

In another embodiment of the present invention, the receiving unit 901 is further configured to receive the pre-configuration information, the pre-configuration information carries the dedicated access resource of the member of the group; and to receive the paging message sent from the network for all the terminals of the group identity, the paging message carries the access resource index and/or the initial access time point when the dedicated access resource is used, the access resource index is used to indicate a dedicated access resource of the terminal.

In another embodiment of the present invention, after the receiving unit 901 receives the paging message, the calculating unit 905 is configured to calculate the terminal access time and the access resource used by the terminal according to the sequence of the terminal, the dedicated access resource information of the group and the initial access time point when the dedicated access resource is used.

For example, the dedicated access resource configured for the group is set to include N access channels, the corresponding $n^{th}$ access channel is set to include Kn available access time slots, each access time slot in the corresponding $n^{th}$ access channel is set to include Mn available signature sequences, each access opportunity is uniquely determined by the calculating unit 905 according to the access channels, the access time slots and the signatures, then the calculating unit 905 arranges the access opportunities according to the order of the access time slot, for the access opportunities with the same access time slots, the calculating unit 905 sequences the access opportunity according to the order of accessing channel configuration, for the access opportunities with the same cannel as well, the calculating unit 905 sequences the access opportunity according to the order of signature sequence configuration, and the accessing unit 903 selects the access opportunity which has the same ordinal position to the configured SEQ as the special access opportunities of its own.

In another embodiment of the present invention, the calculating unit 905 is configured to calculate the terminal access time and the terminal access opportunity; for example, suppose there are k access opportunities in a time period T, the calculating unit 905 calculates the access time t according to the following formula:

$$t = Tstart + floor \frac{SEQn}{k} * T$$

The access resource used by the terminal is obtained by calculating the access opportunity, the access opportunity s is calculated by the calculating unit 905 according to the following formula:

$$s = 1 + SEQn \bmod k$$

Specially, t represents the terminal access time, s represents the access opportunity, Tstart represents the initial access time point, floor represents the operation of rounding down, SEQn represents the $n^{th}$ sequence distributed to the terminal by the network, mod represents modulo, and SEQn is integer that greater than or equals to zero.

In another embodiment of the present invention, the terminal 90 further comprises an updating unit 909. In an arbitrary reporting period, if the terminal in the cell fails to access within pre-set times of reporting period, the corresponding sequence of the terminal will be retrieved by the network, the receiving unit 901 can receive the pre-set time information when receiving the sequence distribution information or the sequence, or may be received individually through the message, for example via the paging message. After the receiving unit 901 receives the sequence distribution information sent from the network or the sequence distributed by the network to the terminal, if the judging unit 911 judges the terminal has saved the sequence, the updating unit 909 is configured to update the sequence, for example to update the sequence saved by the terminal to the received sequence; if the judging unit 911 judges that the terminal has not saved the sequence, the receiving unit 901 receives and saves the sequence sent from the network.

In another embodiment of the present invention, the terminal 90 further comprises a judging unit 911, if power down and power up, reset, cell reselection and so on occurs in the terminal 90, for example, the terminal firstly executes cell selection, after the cell is determined, the judging unit 911 is configured to judge if the group sequence of the cell is saved, if saved, the accessing unit 903 still use the saved sequence, if not, the sending unit 907 applies new sequence from the cell and the communication network element executes the sequence distribution process. The detailed process is described above, and will not be repeated herein.

In another embodiment of the present invention, the terminal 90 further comprises a adjusting unit 913, the sending unit 901 is further configured to receive the distributed maximum sequence Nmax and a sequence adjusting step k sent from the network; after each data reporting (for example, period reporting), the adjusting unit 913 is configured to adjust the sequence of the terminal to: (S+k) mod Nmax+1, Specially S represents the original sequence of each terminal, mod represents modulo.

The detailed working process and function of each unit of the terminal 90, can be referred to the specific process of the method embodiments described above, and will not be repeated herein.

It should be clearly understood by those skilled in the art that, for convenience and simplicity of description, corresponding processes of the aforementioned method embodiments may be referred to for specific operation processes of the above described systems, devices and units, which are not described repeatedly herein.

In the several embodiments provided by the present application, it should be understood that disclosed systems, devices and methods may be implemented in other manners. For example, device embodiments described above are just illustrative. For example, the division of units is just a division of logical functions, and there may be other division manners for practical implementations. For example, multiple units or components may be combined or integrated into another system, or some features may be neglected or may not be performed. At another point, the displayed or discussed mutual coupling or direct coupling or communication link may be indirect coupling or communication link through some interfaces, devices or units, which may be in an electrical form, a mechanical form or other form.

The units described as separated parts may be or may not be physically separated, and the parts displayed as units may be or may not be physical units, which may be located in one place or distributed to multiple network elements. Part or all units therein may be selected to implement the target of solutions provided in the present invention according to the actual demands.

In addition, in various embodiments of the present invention, various functional units may be integrated into one processing unit, or each unit may exist separately and physically, or two or more units may be integrated into one unit. The above integrated units may be implemented in the form of hardware or may be implemented in the form of software functional unit.

When the integrated unit is implemented in the form of a software functional unit and is sold or used as an independent product, the integrated unit may be stored in a computer readable storage medium. Based on this understanding, the technical solution or part that makes contributions to the prior art of the technical solution in the present invention may be essentially embodied in the form of a software product. The computer software product may be stored in a storage medium, and includes a number of instructions that enable a piece of computer equipment (may be a personal computer, a server, or a network equipment) to execute all or part of steps of the method described in various embodiments of the present invention. The preceding storage mediums includes various mediums that can store codes, such as, a U disk, a removable hard disk, a read-only memory (ROM, Read-Only Memory), a random access memory (RAM, Random Access Memory), a magnetic disk, an optical disk, or the like.

The foregoing is only some specific embodiments of the invention without limited to the protection scope of the invention. It is easy for those skilled in the art to conceive changes or substitutions within the technical scope disclosed by the invention, which should fall in the protection scope of the invention. Therefore, the protection scope of the present invention should be defined by that of the claims.

## Claims

1. A method for accessing to network, performed by a communication network element, comprising:

   establishing (401) a group sequence distribution information, wherein the group sequence distribution information comprises a sequence distribution information of each group identity, the sequence distribution information comprises a corresponding relationship between a sequence and a terminal identity, and the group identity is an identifier of a terminal group;
   sending (403) the sequence distribution information or the sequence to a terminal, so that the terminal accesses to a network according to an order of the sequence when reporting data;
   wherein the method further comprises:

      sending a distributed maximum sequence Nmax and a sequence adjusting step k to the terminal;
      adjusting the sequence of each terminal of each group to: (S+k) mod Nmax+1 after each data reporting, wherein S represents the original sequence of each terminal, mod represents modulo.

2. The method according to claim 1, further comprising:
receiving the group identity sent from a server.

3. The method according to claim 1, further comprising:

receiving the group identity sent by the terminal; and
searching that whether the group sequence distribution information corresponding to the group identity is saved;
wherein the establishing a group sequence distribution information comprises:
establishing the group sequence distribution information if there is not the group sequence distribution information corresponding to the group identity.

4. The method according to claim 2 or 3, further comprising:
receiving an informing message of a core network which identifies a group that the terminal belongs to during a registration procedure of the terminal, wherein the informing message is used for informing to distribute the sequence to the terminal.

5. The method according to claim 2 or 3, wherein that the group identity corresponds to multiple sequences, and all the terminals of a same cell correspond to one group identity; or the terminals with a same report service type in a same cell correspond to a same group identity; or the terminals with a same report service type in a same cell correspond to different group identities.

6. The method according to claim 2 or 3, wherein the sending the sequence distribution information or sequence to a terminal, comprises:

receiving a sequence request information sent from the terminal;
searching the group sequence distribution information according to a group identity on which the terminal belonged carried in the sequence request information, in order to find a sequence distribution information corresponding to the group identity on which the terminal belonged;
sending the searched sequence distribution information or the sequence included in the searched sequence distribution information to the terminal if the group sequence distribution information corresponding to the terminal is saved;
adding and distributing a second sequence to the terminal, and establishing a second sequence distribution information of the second sequence, and sending the second sequence distribution information or the second sequence to the terminal if there is not the group sequence distribution information corresponding to the terminal.

7. The method according to claim 2 or 3, wherein the sending the sequence distribution information or sequence to a terminal, comprises:

receiving a sequence request information sent from the terminal;
determining a group identity of the terminal according to service type information of the terminal carried in the sequence request information;
searching the group sequence distribution information according to the group identity, in order to find a sequence distribution information corresponding to the group identity on which the terminal belonged;
sending the searched sequence distribution information or a second sequence included in the searched sequence distribution information to the terminal if the group sequence distribution information corresponding to the terminal is saved;
adding and distributing a second sequence to the terminal, and establishing a second sequence distribution information of the second sequence, and sending the second established sequence distribution information or the second sequence to the terminal if there is not the group sequence distribution information corresponding to the terminal.

8. The method according to claim 6, wherein the receiving the sequence request information sent from the terminal, comprises:
receiving the sequence request information sent from the terminal through a radio recourse control connection request (RRC CONNECTION REQUEST) or a radio recourse control connection setup complete (RRC CONNECTION SETUP COMPLETE).

9. The method according to claim 1, wherein the sending the sequence distribution information or the sequence to the terminal, comprises:

sending the sequence distribution information or the sequence carried in a radio recourse control connection setup (RRC CONNECTION SETUP) message, physical channel reconfiguration (PHYSICAL CHANNEL RECONFIGURATION) message, radio bearer reconfiguration (RADIO BEARER RECONFIGURATION) message or MAC header to the terminal.

10. The method according to claim 2 or 3, further comprising:

sending a paging message to all the terminals corresponding to the group identity, wherein the paging message comprises access information of all members of the group, the access information comprises a dedicated access resource of any one of all members of the group and an initial access time point of any one of all members of the group when the access resource is used.

11. The method according to claim 2 or 3, further comprising:

sending a paging message to all the terminals corresponding to the group identity, wherein an access resource index is carried by the paging message and indicates a dedicated access resource of the terminal and an initial access time point when the dedicated access resource is used;

sending a dedicated access resource of the members of the group and an initial access time point when the dedicated access resource is used to the terminal through a broadcasting message,.

12. The method according to claim 2 or 3, further comprising:

sending a pre-configuration information when sending the sequence distribution information or the sequence to the terminal, wherein the pre-configuration information carries dedicated access resource of the members of the group;

sending a paging message to all the terminals corresponding to the group identity, wherein the paging message carries an access resource index and/or an initial access time point when the dedicated access resource is used, the access resource index is used to indicate dedicated access resource of the terminal.

13. The method according to claim 1, further comprising:

retrieving the sequence corresponding to the terminal in arbitrary reporting period, if the terminal fails to access or fails to report data during the pre-set times of reporting periods;

distributing the retrieved sequence to the terminals whose sequence is greater than the retrieved sequence or to the terminals that newly enter the cell during a following reporting period of the arbitrary reporting period.

14. A method for accessing to network, performed by a terminal, comprising:

receiving (501) a sequence distribution information sent from a network or a sequence distributed to a terminal by the network, wherein the sequence distribution information comprises a corresponding relationship between a sequence and a terminal identity, the sequence distribution information is a sequence distribution information in a group sequence distribution information and the group sequence distribution information comprises a sequence distribution information of each group identity, and the group identity is an identifier of a terminal group;

accessing (503) to the network according to an order of the sequence when the terminal reports data;

wherein the method further comprises:

receiving a distributed maximum sequence Nmax and a sequence adjusting step k sent from the network;

adjusting the sequence of the terminal after each data reporting to: $(S+k) \bmod Nmax+1$, wherein S represents the original sequence of each terminal, mod represents modulo.

15. The method according to claim 14, further comprising:

sending a sequence request information to the network by the terminal, wherein the sequence request information carries a group identity on which the terminal belonged or a service type information;

receiving, by the terminal, a sequence distribution information corresponding to the group identity on which the terminal belonged which is obtained during a search of the group sequence distribution information according to the group identity or service type information sent from the network.

**16.** The method according to claim 15, wherein the sending a sequence request information to the network by the terminal, comprises:
sending a radio recourse control connection request (RRC CONNECTION REQUEST) to the network by the terminal, the radio recourse control connection request carries sequence request information, the sequence request information comprises group identity.

**17.** The method according to claim 14, wherein the accessing to the network according to the order of the sequence when the terminal reports the data, comprises:

receiving a paging message sent from the network for all the terminals of a group identity, the paging message comprises access information of all the members of the group, the access information comprises a dedicated access resource of the members of the group and an initial access time point when the dedicated access resource is used;
accessing to the network through using the access information in the order of the sequence by all the terminals of the group.

**18.** The method according to claim 14, wherein the accessing to the network according to the order of the sequence when the terminal reports the data, comprises:

receiving a paging message sent from the network for all the terminals of a group identity, the paging message carries a access resource index, which is used to indicate a dedicated access resource of the terminal and an initial access time point when the dedicated access resource is used;
receiving the dedicated access resource of the members of the group and the initial access time point when the dedicated access resource is used, wherein the dedicated access resource and the initial access time point are sent from the network through a broadcasting message;
accessing to the network in the order of the sequence by all the terminals of the group through using the dedicated access resource and the initial access time point when the dedicated access resource is used.

**19.** The method according to claim 14, further comprising:

receiving a pre-configuration information, wherein the pre-configuration information carries dedicated access resource of the member of a group;
receiving a paging message sent from the network for all the terminals of the group identity, the paging message carries an access resource index and an initial access time point when the dedicated access resource is used, the access resource index is used to indicate a dedicated access resource of the terminal.

**20.** The method according to claim 17, 18 or 19, further comprising:
calculating a terminal access time and an access resource used by the terminal after the terminal receives the paging message, according to the sequence of the terminal, the dedicated access resource information of the group and the initial access time point when the dedicated access resource is used.

**21.** The method according to claim 20, wherein the calculating a terminal access time and an access resource used by the terminal, comprises:

calculating each of access opportunities according to the access channels, the access time slots and the signature sequences, wherein N, M and n are positive integer, wherein the dedicated access resource configured for the group is set to include N access channels, the corresponding $n^{th}$ access channel include is set to include Kn available access time slots, and each access time slot in the corresponding $n^{th}$ access channel is set to include Mn available signatures;
arranging the access opportunities according to the order of the access time slots.

**22.** The method according to claim 20, wherein the calculating a terminal access time and an access resource used by the terminal, comprising: calculating the terminal access time and the terminal access opportunity;
when there are k access opportunities in a time period T, access time t is calculated according to the following formula:

$$ t = Tstart + floor\frac{SEQn}{k} * T $$

the access resource used by the terminal is obtained by calculating the access opportunity, the access opportunity is calculated according to the following formula:

$$s = 1 + SEQn \bmod k;$$

wherein, t represents the terminal access time, s represents the terminal access opportunity, Tstart represents the initial access time point, floor represents the operation of rounding down, SEQn represents the $n^{th}$ sequence distributed to the terminal by the network, mod represents modulo, and SEQn is integer that greater than or equals to zero.

23. The method according to claim 14, further comprising:
retrieving the corresponding sequence of the terminal by the network in arbitrary reporting period, if terminal in the cell fails to access within pre-set times of reporting period.

24. The method according to claim 14, further comprising:

updating the sequence if the terminal has saved the sequence, after the terminal receives the sequence distribution information sent from the network or the network distributes the sequence to the terminal;
receiving and saving the sequence sent from the network, if the terminal has not saved the sequence.

25. A communication network element, comprising:

an establishing unit (701), configured to establish a group sequence distribution information, wherein the group sequence distribution information comprises a sequence distribution information of each group identity, the sequence distribution information comprises a corresponding relationship between a sequence and a terminal identity, and the group identity is an identifier of a terminal group; and
a sending unit (703), configured to send the sequence distribution information or sequence to a terminal, so that the terminal accesses to the network according to an order of the sequence when reporting data;
wherein the sending unit (703) is further configured to send a distributed maximum sequence Nmax and a sequence adjusting step k to the terminal;
the communication network element further comprises:
an adjusting unit (713), configured to adjust the sequence of each terminal of each group to: (S+k) mod Nmax+1 after each data reporting, wherein S represents the original sequence of each terminal, mod represents modulo.

26. The communication network element according to claim 25, further comprising:
a distributing unit (702), configured to distribute the sequence to terminals.

27. The communication network element according to claim 26, further comprising:

a receiving unit (705), configured to receive the group identity sent from a server;
the distribution unit (702) is further configured to distribute the sequence to the terminal corresponding to the group identity according to the group identity.

28. The communication network element according to claim 27, further comprising:

a searching unit (707), configured to search that whether the group sequence distribution information corresponding to the group identity is saved;
the establishing unit (701) is further configured to determine whether to establish group sequence distribution information according to a searching result of the searching unit (707).

29. The communication network element according to claim 27, further comprising:
a paging unit (711), configured to send a paging message to all the terminals corresponding to the group identity, the paging message comprises the access information of all the members of the group, the access information comprises a dedicated access resource of the members of the group and an initial access time point when the dedicated access resource is used.

30. The communication network element according to claim 27, further comprising:

a paging unit (711), configured to send a paging message to all the terminals corresponding to the group identity, the paging message carries an access resource index which is used to indicate a dedicated access resource of the terminal and an initial access time point when the dedicated access resource is used;

a broadcasting unit (712), configured to send to the terminal through a broadcasting message with the dedicated access resource of the members of the group and the initial access time point when the dedicated access resource is used .

31. The communication network element according to claim 27,

the sending unit (703) is further configured to send a pre-configuration information, wherein the pre-configuration information carries the dedicated access resource of the members of the group;

the communication network element further comprising:

a paging unit (711), configured to send a paging message to all the terminals corresponding to the group identity, the paging message carries an access resource index and/or an initial access time point when the dedicated access resource is used, the access resource index is used to indicate a dedicated access resource of the terminal.

32. A terminal, comprising:

a receiving unit (901), configured to receive a sequence distribution information sent from the network or a sequence distributed to the terminal by the network, wherein the sequence distribution information comprises a corresponding relationship between a sequence and a terminal identity, the sequence distribution information is a sequence distribution information in a group sequence distribution information and the group sequence distribution information comprises a sequence distribution information of each group identity, and the group identity is an identifier of a terminal group; and

an accessing unit (903), configured to access to the network according to the order of the sequence when the terminal reports data;

wherein the receiving unit (901) is further configured to receive a distributed maximum sequence Nmax and a sequence adjusting step k sent from the network;

the terminal further comprises:

an adjusting unit (913), configured to adjust the sequence of the terminal after each data reporting to: (S+k) mod Nmax+1, wherein S represents the original sequence of each terminal, mod represents modulo.

33. The terminal according to claim 32, wherein,

the receiving unit (901) is further configured to receive a paging message sent from the network for all the terminals of a group identity, wherein the paging message comprises access information of all the members of a group, and the access information comprises a dedicated access resource of the members of the group and an initial access time point when the dedicated access resource is used.

34. The terminal according to claim 32, wherein,

the receiving unit (901) is further configured to receive a paging message sent from the network for all the terminals of the group identity, wherein the paging message carries an access resource index, which is used to indicate a dedicated access resource of the terminal and an initial access time point when the dedicated access resource is used; and

the receiving unit (901) is further configured to receive the dedicated access resource of the members of the group and the initial access time point when the dedicated access resource is used, wherein the dedicated access resource and the initial access time point are sent from the network through a broadcasting message.

35. The terminal according to claim 32, wherein,

the receiving unit (901) is further configured to receive a pre-configuration information, wherein the pre-configuration information carries dedicated access resource of the member of the group; and

the receiving unit (901) is further configured to receive a paging message sent from the network for all the terminals of the group identity, wherein the paging message carries an access resource index and/or an initial access time point when the dedicated access resource is used, and the access resource index is used to indicate a dedicated access resource of the terminal.

36. The terminal according to claim 33, 34 or 35, further comprising:

a calculating unit (905), configured to calculate a terminal access time and an access resource used by the terminal according to the sequence of the terminal, the dedicated access resource information of the group and the initial access time point when the dedicated access resource is used.

**Patentansprüche**

1. Verfahren zum Zugreifen auf ein Netzwerk, durchgeführt von einem Kommunikationsnetzelement, das Folgendes umfasst:

   Einrichten (401) einer Gruppensequenzverteilungsinformation, wobei die Gruppensequenzverteilungsinformation eine Sequenzverteilungsinformation jeder Gruppenidentität umfasst, die Sequenzverteilungsinformation eine entsprechende Beziehung zwischen einer Sequenz und einer Endgeräteidentität umfasst, und die Gruppenidentität ein Identifikator einer Endgerätegruppe ist;
   Senden (403) der Sequenzverteilungsinformation oder der Sequenz zu einem Endgerät, so dass das Endgerät beim Melden von Daten gemäß einer Reihenfolge der Sequenz auf ein Netzwerk zugreift;
   wobei das Verfahren ferner Folgendes umfasst:

   Senden einer verteilten maximalen Sequenz Nmax und eines Sequenzeinstellschritts "k" an das Endgerät;
   Einstellen der Sequenz jedes Endgerätes jeder Gruppe auf: (S+k) mod Nmax+1 nach jeder Datenmeldung, wobei "S" die ursprüngliche Sequenz jedes Endgerätes repräsentiert, und "mod" modulo repräsentiert.

2. Verfahren gemäß Anspruch 1, das ferner Folgendes umfasst:
   Empfangen der von einem Server gesendeten Gruppenidentität.

3. Verfahren gemäß Anspruch 1, das ferner Folgendes umfasst:

   Empfangen der von dem Endgerät gesendeten Gruppenidentität; und
   Suchen, ob die der Gruppenidentität entsprechende Gruppensequenzverteilungsinformation gespeichert ist;
   wobei das Einrichten einer Gruppensequenzverteilungsinformation Folgendes umfasst:
   Einrichten der Gruppensequenzverteilungsinformation, falls die der Gruppenidentität entsprechende Gruppensequenzverteilungsinformation nicht vorhanden ist.

4. Verfahren gemäß Anspruch 2 oder 3, das ferner Folgendes umfasst:
   Empfangen einer Informationsnachricht von einem Kernnetzwerk, die eine Gruppe identifiziert, der das Endgerät angehört, während eines Registrierungsverfahrens des Endgerätes, wobei die Informationsnachricht zum Informieren verwendet wird, die Sequenz an das Endgerät zu verteilen.

5. Verfahren gemäß Anspruch 2 oder 3, wobei die Gruppenidentität mehreren Sequenzen entspricht, und alle Endgeräte einer gleichen Zelle einer Gruppenidentität entsprechen; oder die Endgeräte mit einem gleichen Berichtdiensttyp in einer gleichen Zelle einer gleichen Gruppenidentität entsprechen; oder die Endgeräte mit einem gleichen Berichtdiensttyp in einer gleichen Zelle unterschiedlichen Gruppenidentitäten entsprechen.

6. Verfahren gemäß Anspruch 2 oder 3, wobei das Senden der Sequenzverteilungsinformation oder der Sequenz an ein Endgerät Folgendes umfasst:

   Empfangen einer von dem Endgerät gesendeten Sequenzanforderungsinformation;
   Suchen der Gruppensequenzverteilungsinformation gemäß einer Gruppenidentität, welcher das Endgerät angehörte, die in der Sequenzanforderungsinformation enthalten ist, um eine Sequenzverteilungsinformation zu finden, die der Gruppenidentität entspricht, welcher das Endgerät angehörte;
   Senden der gesuchten Sequenzverteilungsinformation oder der Sequenz, die in der gesuchten Sequenzverteilungsinformation enthalten ist, an das Endgerät, falls die dem Endgerät entsprechende Gruppensequenzverteilungsinformation gespeichert ist;
   Hinzufügen und Verteilen einer zweiten Sequenz zu dem Endgerät, und Einrichten einer zweiten Sequenzverteilungsinformation der zweiten Sequenz, und Senden der zweiten Sequenzverteilungsinformation oder der zweiten Sequenz an das Endgerät, falls die dem Endgerät entsprechende Gruppensequenzverteilungsinformation nicht vorhanden ist.

7. Verfahren gemäß Anspruch 2 oder 3, wobei das Senden der Sequenzverteilungsinformation oder der Sequenz an ein Endgerät Folgendes umfasst:

   Empfangen einer von dem Endgerät gesendeten Sequenzanforderungsinformation;
   Bestimmen einer Gruppenidentität des Endgerätes gemäß der Diensttypinformation des Endgerätes, die in der Sequenzanforderungsinformation enthalten ist;

Suchen der Gruppensequenzverteilungsinformation gemäß der Gruppenidentität, um eine Sequenzverteilungsinformation zu finden, die der Gruppenidentität entspricht, welcher das Endgerät angehörte;

Senden der gesuchten Sequenzverteilungsinformation oder einer zweiten Sequenz, die in der gesuchten Sequenzverteilungsinformation enthalten ist, an das Endgerät, falls die dem Endgerät entsprechende Gruppensequenzverteilungsinformation gespeichert ist;

Hinzufügen und Verteilen einer zweiten Sequenz zu dem Endgerät, und Einrichten einer zweiten Sequenzverteilungsinformation der zweiten Sequenz, und Senden der zweiten eingerichteten Sequenzverteilungsinformation oder der zweiten Sequenz an das Endgerät, falls die dem Endgerät entsprechende Gruppensequenzverteilungsinformation nicht vorhanden ist.

8. Verfahren gemäß Anspruch 6, wobei das Empfangen der vom Endgerät gesendeten Sequenzanforderungsinformation Folgendes umfasst:

Empfangen der vom Endgerät gesendeten Sequenzanforderungsinformation durch eine Funkressourcensteuerungs-Verbindungsanforderung (RRC CONNECTION REQUEST) oder einen Funkressourcensteuerungs-Verbindungsaufbauabschluss (RRC CONNECTION SETUP COMPLETE).

9. Verfahren gemäß Anspruch 1, wobei das Senden der Sequenzverteilungsinformation oder der Sequenz an das Endgerät Folgendes umfasst:

Senden der Sequenzverteilungsinformation oder der Sequenz, die in einer Nachricht des Funkressourcensteuerungs-Verbindungsaufbaus (RRC CONNECTION SETUP), einer Nachricht der Neukonfiguration des physikalischen Kanals (PHYSICAL CHANNEL RECONFIGURATION), einer Nachricht der Funkträger-Neukonfiguration (RADIO BEARER RECONFIGURATION) oder der MAC-Kopfzeile enthalten ist, an das Endgerät.

10. Verfahren gemäß Anspruch 2 oder 3, das ferner Folgendes umfasst:

Senden einer Paging-Nachricht an alle der Gruppenidentität entsprechenden Endgeräte, wobei die Paging-Nachricht Zugriffsinformationen von allen Mitgliedern der Gruppe umfasst, und die Zugriffsinformationen eine dedizierte Zugriffsressource eines beliebigen aller Mitglieder der Gruppe und einen anfänglichen Zugriffszeitpunkt eines beliebigen aller Mitglieder der Gruppe umfassen, wann die Zugriffsressource verwendet wird.

11. Verfahren gemäß Anspruch 2 oder 3, das ferner Folgendes umfasst:

Senden einer Paging-Nachricht an alle der Gruppenidentität entsprechenden Endgeräte, wobei ein Zugriffsressourcenindex durch die Paging-Nachricht befördert wird und eine dedizierte Zugriffsressource des Endgerätes und einen anfänglichen Zugriffszeitpunkt angibt, wann die dedizierte Zugriffsressource verwendet wird;

Senden einer dedizierten Zugriffsressource der Mitglieder der Gruppe und eines anfänglichen Zugriffszeitpunkts, wann die dedizierte Zugriffsressource verwendet wird, durch eine Rundsendenachricht an das Endgerät.

12. Verfahren gemäß Anspruch 2 oder 3, das ferner Folgendes umfasst:

Senden einer Vorkonfigurationsinformation, wenn die Sequenzverteilungsinformation oder die Sequenz an das Endgerät gesendet wird, wobei die Vorkonfigurationsinformation eine dedizierte Zugriffsressource der Mitglieder der Gruppe enthält;

Senden einer Paging-Nachricht an alle der Gruppenidentität entsprechenden Endgeräte, wobei die Paging-Nachricht einen Zugriffsressourcenindex und/oder einen anfänglichen Zugriffszeitpunkt enthält, wann die dedizierte Zugriffsressource verwendet wird, wobei der Zugriffsressourcenindex verwendet wird, um die dedizierte Zugriffsressource des Endgerätes anzugeben.

13. Verfahren gemäß Anspruch 1, das ferner Folgendes umfasst:

Abrufen der dem Endgerät entsprechenden Sequenz in einer beliebigen Meldeperiode, falls es dem Endgerät misslingt zuzugreifen, oder misslingt, Daten während der voreingestellten Zeiten der Meldeperioden zu melden;

Verteilen der abgerufenen Sequenz auf die Endgeräte, deren Sequenz größer als die abgerufene Sequenz ist, oder an die Endgeräte, welche während einer folgenden Meldeperiode der beliebigen Meldeperiode neu in die Zelle eintreten.

14. Verfahren zum Zugreifen auf ein Netzwerk, durchgeführt von einem Endgerät, das Folgendes umfasst:

Empfangen (501) einer von einem Netzwerk gesendeten Sequenzverteilungsinformation oder einer durch das Netzwerk an ein Endgerät verteilten Sequenz, wobei die Sequenzverteilungsinformation eine entsprechende Beziehung zwischen einer Sequenz und einer Endgeräteidentität umfasst, die Sequenzverteilungsinformation eine Sequenzverteilungsinformation in einer Gruppensequenzverteilungsinformation ist und die Gruppensequenzverteilungsinformation eine Sequenzverteilungsinformation jeder Gruppenidentität umfasst, und die Gruppenidentität ein Identifikator einer Endgerätegruppe ist;

Zugreifen (503) auf das Netzwerk gemäß einer Reihenfolge der Sequenz, wenn das Endgerät Daten meldet; wobei das Verfahren ferner Folgendes umfasst:

Empfangen einer verteilten maximalen Sequenz "Nmax" und eines von dem Netzwerk gesendeten Sequenzeinstellschritts "k";

Einstellen der Sequenz des Endgerätes nach jeder Datenmeldung auf: (S+k) mod Nmax+1, wobei "S" die ursprüngliche Sequenz jedes Endgerätes repräsentiert, und "mod" modulo repräsentiert.

**15.** Verfahren gemäß Anspruch 14, das ferner Folgendes umfasst:

Senden einer Sequenzanforderungsinformation an das Netzwerk durch das Endgerät, wobei die Sequenzanforderungsinformation eine Gruppenidentität, welcher das Endgerät angehörte, oder eine Diensttypinformation enthält;

Empfangen, durch das Endgerät, einer Sequenzverteilungsinformation, die der Gruppenidentität entspricht, welcher das Endgerät angehörte, die während einer Suche der Gruppensequenzverteilungsinformation gemäß der Gruppenidentität oder der vom Netzwerk gesendeten Diensttypinformation erhalten wird.

**16.** Verfahren gemäß Anspruch 15, wobei das Senden einer Sequenzanforderungsinformation an das Netzwerk durch das Endgerät Folgendes umfasst:

Senden einer Funkressourcensteuerungs-Verbindungsanforderung (RRC CONNECTION REQUEST) an das Netzwerk durch das Endgerät, wobei die Funkressourcensteuerungs-Verbindungsanforderung eine Sequenzanforderungsinformation enthält und die Sequenzanforderungsinformation eine Gruppenidentität umfasst.

**17.** Verfahren gemäß Anspruch 14, wobei das Zugreifen auf das Netzwerk gemäß der Reihenfolge der Sequenz, wann das Endgerät die Daten meldet, Folgendes umfasst:

Empfangen einer von dem Netzwerk gesendeten Paging-Nachricht für alle Endgeräte einer Gruppenidentität, wobei die Paging-Nachricht Zugriffsinformationen von allen Mitgliedern der Gruppe umfasst, die Zugriffsinformationen eine dedizierte Zugriffsressource der Mitglieder der Gruppe und einen anfänglichen Zugriffszeitpunkt umfassen, wann die dedizierte Zugriffsressource verwendet wird;

Zugreifen auf das Netzwerk durch Verwenden der Zugriffsinformationen in der Reihenfolge der Sequenz durch alle Endgeräte der Gruppe.

**18.** Verfahren gemäß Anspruch 14, wobei das Zugreifen auf das Netzwerk gemäß der Reihenfolge der Sequenz, wann das Endgerät die Daten meldet, Folgendes umfasst:

Empfangen einer von dem Netzwerk gesendeten Paging-Nachricht für alle Endgeräte einer Gruppenidentität, wobei die Paging-Nachricht einen Zugriffsressourcenindex enthält, der verwendet wird, um eine dedizierte Zugriffsressource des Endgerätes und einen anfänglichen Zugriffszeitpunkt anzugeben, wann die dedizierte Zugriffsressource verwendet wird;

Empfangen der dedizierten Zugriffsressource der Mitglieder der Gruppe und des anfänglichen Zugriffszeitpunkts, wann die dedizierte Zugriffsressource verwendet wird, wobei die dedizierte Zugriffsressource und der anfängliche Zugriffszeitpunkt vom Netzwerk durch eine Rundsendenachricht gesendet werden;

Zugreifen auf das Netzwerk in der Reihenfolge der Sequenz durch alle Endgeräte der Gruppe durch Verwenden der dedizierten Zugriffsressource und des anfänglichen Zugriffszeitpunkts, wann die dedizierte Zugriffsressource verwendet wird.

**19.** Verfahren gemäß Anspruch 14, das ferner Folgendes umfasst:

Empfangen einer Vorkonfigurationsinformation, wobei die Vorkonfigurationsinformation eine dedizierte Zugriffsressource der Mitglieder einer Gruppe enthält;

Empfangen einer vom Netzwerk gesendeten Paging-Nachricht für alle Endgeräte der Gruppenidentität, wobei die Paging-Nachricht einen Zugriffsressourcenindex und einen anfänglichen Zugriffszeitpunkt enthält, wann die dedizierte Zugriffsressource verwendet wird, wobei der Zugriffsressourcenindex verwendet wird, um eine dedizierte Zugriffsressource des Endgerätes anzugeben.

20. Verfahren gemäß Anspruch 17, 18 oder 19, das ferner Folgendes umfasst:
Berechnen einer Endgeräte-Zugriffszeit und einer Zugriffsressource, die von dem Endgerät verwendet wird, nachdem das Endgerät die Paging-Nachricht empfängt, gemäß der Sequenz des Endgerätes, der dedizierten Zugriffsressourceninformation der Gruppe und dem anfänglichen Zugriffszeitpunkt, wenn die dedizierte Zugriffsressource verwendet wird.

21. Verfahren gemäß Anspruch 20, wobei das Berechnen einer Endgeräte-Zugriffszeit und einer von dem Endgerät verwendeten Zugriffsressource Folgendes umfasst:

Berechnen jeder der Zugriffsgelegenheiten gemäß den Zugriffskanälen, den Zugriffszeitschlitzen und den Signatursequenzen, wobei "N", "M" und "n" positive Ganzzahlen sind, wobei die für die Gruppe konfigurierte dedizierte Zugriffsressource eingestellt ist, "N" Zugriffskanäle einzubeziehen, der entsprechende "n"-te Zugriffskanal eingestellt ist, "Kn" verfügbare Zugriffszeitschlitze einzubeziehen, und jeder Zugriffszeitschlitz in dem entsprechenden "n"-ten Zugriffskanal eingestellt ist, "Mn" verfügbare Signaturen einzubeziehen;
Anordnen der Zugriffsgelegenheiten gemäß der Reihenfolge der Zugriffszeitschlitze.

22. Verfahren gemäß Anspruch 20, wobei das Berechnen einer Endgeräte-Zugriffszeit und einer von dem Endgerät verwendeten Zugriffsressource Folgendes umfasst:

Berechnen der Endgeräte-Zugriffszeit und der Endgeräte-Zugriffsgelegenheit;
wenn "k" Zugriffsgelegenheiten in einem Zeitraum "T" vorhanden sind, wird die Zugriffszeit "t" gemäß der folgenden Formel berechnet:

$$t = Tstart + floor\frac{SEQn}{k} * T$$

die von dem Endgerät verwendete Zugriffsressource wird durch Berechnen der Zugriffsgelegenheit erhalten, und die Zugriffsgelegenheit wird gemäß der folgenden Formel berechnet:

$$s = 1 + SEQn \bmod k;$$

wobei "t" die Endgeräte-Zugriffszeit repräsentiert, "s" die Endgeräte-Zugriffsgelegenheit repräsentiert, "Tstart" den anfänglichen Zugriffszeitpunkt repräsentiert, "floor" die Operation des Abrundens repräsentiert, "SEQn" die n-te Sequenz repräsentiert, die durch das Netzwerk an das Endgerät verteilt wird, "mod" das modulo repräsentiert, und "SEQn" eine Ganzzahl ist, die größer oder gleich Null ist.

23. Verfahren gemäß Anspruch 14, das ferner Folgendes umfasst:
Abrufen der entsprechenden Sequenz des Endgerätes durch das Netzwerk in einer beliebigen Meldeperiode, falls es dem Endgerät in der Zelle misslingt, innerhalb voreingestellter Zeiten der Meldeperiode zuzugreifen.

24. Verfahren gemäß Anspruch 14, das ferner Folgendes umfasst:

Aktualisieren der Sequenz, falls das Endgerät die Sequenz gespeichert hat, nachdem das Endgerät die von dem Netzwerk gesendete Sequenzverteilungsinformation empfängt, oder das Netzwerk die Sequenz an das Endgerät verteilt;
Empfangen und Speichern der von dem Netzwerk gesendeten Sequenz, falls das Endgerät die Sequenz nicht gespeichert hat.

25. Kommunikationsnetzwerkelement, das Folgendes umfasst:

eine Einrichtungseinheit (701), die dazu ausgelegt ist, eine Gruppensequenzverteilungsinformation einzurichten, wobei die Gruppensequenzverteilungsinformation eine Sequenzverteilungsinformation jeder Gruppenidentität umfasst, die Sequenzverteilungsinformation eine entsprechende Beziehung zwischen einer Sequenz und einer Endgeräteidentität umfasst, und die Gruppenidentität ein Identifikator einer Endgerätegruppe ist; und eine Sendeeinheit (703), die dazu ausgelegt ist, die Sequenzverteilungsinformation oder die Sequenz zu einem Endgerät zu senden, so dass das Endgerät beim Melden von Daten gemäß einer Reihenfolge der Sequenz auf das Netzwerk zugreift;

wobei die Sendeeinheit (703) ferner dazu ausgelegt ist, eine verteilte maximale Sequenz "Nmax" und einen Sequenzeinstellschritt "k" an das Endgerät zu senden;

wobei das Kommunikationsnetzwerkelement ferner Folgendes umfasst:

eine Einstelleinheit (713), die dazu ausgelegt ist, die Sequenz jedes Endgerätes jeder Gruppe wie folgt einzustellen: (S+k) mod Nmax+1 nach jeder Datenmeldung, wobei "S" die ursprüngliche Sequenz jedes Endgerätes repräsentiert, und "mod" modulo repräsentiert.

26. Kommunikationsnetzwerkelement gemäß Anspruch 25, das ferner Folgendes umfasst:
eine Verteilungseinheit (702), die dazu ausgelegt ist, die Sequenz auf Endgeräte zu verteilen.

27. Kommunikationsnetzwerkelement gemäß Anspruch 26, das ferner Folgendes umfasst:

eine Empfangseinheit (705), die dazu ausgelegt ist, die von einem Server gesendeten Gruppenidentität zu empfangen;

wobei die Verteilungseinheit (702) ferner dazu ausgelegt ist, die Sequenz gemäß der Gruppenidentität auf das Endgerät zu verteilen, das der Gruppenidentität entspricht.

28. Kommunikationsnetzwerkelement gemäß Anspruch 27, das ferner Folgendes umfasst:

eine Sucheinheit (707), die dazu ausgelegt ist zu suchen, ob die der Gruppenidentität entsprechende Gruppensequenzverteilungsinformation gespeichert ist;

wobei die Einrichtungseinheit (701) ferner dazu ausgelegt ist zu bestimmen, ob eine Gruppensequenzverteilungsinformation gemäß einem Suchergebnis der Sucheinheit (707) einzurichten ist.

29. Kommunikationsnetzwerkelement gemäß Anspruch 27, das ferner Folgendes umfasst:
eine Paging-Einheit (711), die dazu ausgelegt ist, eine Paging-Nachricht an alle der Gruppenidentität entsprechenden Endgeräte zu senden, wobei die Paging-Nachricht die Zugriffsinformationen von allen Mitgliedern der Gruppe umfasst, die Zugriffsinformationen eine dedizierte Zugriffsressource der Mitglieder der Gruppe und einen anfänglichen Zugriffszeitpunkt umfassen, wann die dedizierte Zugriffsressource verwendet wird.

30. Kommunikationsnetzwerkelement gemäß Anspruch 27, das ferner Folgendes umfasst:

eine Paging-Einheit (711), die dazu ausgelegt ist, eine Paging-Nachricht an alle der Gruppenidentität entsprechenden Endgeräte zu senden, wobei die Paging-Nachricht einen Zugriffsressourcenindex enthält, der verwendet wird, um eine dedizierte Zugriffsressource des Endgerätes und einen anfänglichen Zugriffszeitpunkt anzugeben, wann die dedizierte Zugriffsressource verwendet wird;

eine Rundsendeeinheit (712), die dazu ausgelegt ist, durch eine Rundsendenachricht mit der dedizierten Zugriffsressource der Mitglieder der Gruppe und dem anfänglichen Zugriffszeitpunkt an das Endgerät zu senden, wenn die dedizierte Zugriffsressource verwendet wird.

31. Kommunikationsnetzwerkelement gemäß Anspruch 27,
wobei die Sendeeinheit (703) ferner dazu ausgelegt ist, eine Vorkonfigurationsinformation zu senden, wobei die Vorkonfigurationsinformation die dedizierte Zugriffsressource der Mitglieder der Gruppe enthält;

wobei das Kommunikationsnetzwerkelement ferner Folgendes umfasst:

eine Paging-Einheit (711), die dazu ausgelegt ist, eine Paging-Nachricht an alle der Gruppenidentität entsprechenden Endgeräte zu senden, wobei die Paging-Nachricht einen Zugriffsressourcenindex und/oder einen anfänglichen Zugriffszeitpunkt enthält, wann die dedizierte Zugriffsressource verwendet wird, wobei der Zugriffsressourcenindex verwendet wird, um die dedizierte Zugriffsressource des Endgerätes anzugeben.

32. Endgerät, das Folgendes umfasst:

eine Empfangseinheit (901), die dazu ausgelegt ist, eine von dem Netzwerk gesendete Sequenzverteilungsinformation oder eine durch das Netzwerk an das Endgerät verteilte Sequenz zu empfangen, wobei die Sequenzverteilungsinformation eine entsprechende Beziehung zwischen einer Sequenz und einer Endgeräteidentität umfasst, die Sequenzverteilungsinformation eine Sequenzverteilungsinformation in einer Gruppensequenzverteilungsinformation ist und die Gruppensequenzverteilungsinformation eine Sequenzverteilungsinformation jeder Gruppenidentität umfasst, und die Gruppenidentität ein Identifikator einer Endgerätegruppe ist; und

eine Zugriffseinheit (903), die dazu ausgelegt ist, gemäß der Reihenfolge der Sequenz auf das Netzwerk zuzugreifen, wenn das Endgerät Daten meldet;

wobei die Empfangseinheit (901) ferner dazu ausgelegt ist, eine von dem Netzwerk gesendete verteilte maximale Sequenz "Nmax" und einen Sequenzeinstellschritt "k" zu empfangen;

wobei das Endgerät ferner Folgendes umfasst:

eine Einstelleinheit (913), die dazu ausgelegt ist, die Sequenz des Endgerätes nach jeder Datenmeldung wie folgt einzustellen: (S+k) mod Nmax+1, wobei "S" die ursprüngliche Sequenz jedes Endgerätes repräsentiert, und "mod" modulo repräsentiert.

33. Endgerät gemäß Anspruch 32, wobei

die Empfangseinheit (901) ferner dazu ausgelegt ist, eine von dem Netzwerk gesendete Paging-Nachricht für alle Endgeräte einer Gruppenidentität zu empfangen, wobei die Paging-Nachricht Zugriffsinformationen von allen Mitgliedern einer Gruppe umfasst, und die Zugriffsinformationen eine dedizierte Zugriffsressource der Mitglieder der Gruppe und einen anfänglichen Zugriffszeitpunkt umfassen, wann die dedizierte Zugriffsressource verwendet wird.

34. Endgerät gemäß Anspruch 32, wobei

die Empfangseinheit (901) ferner dazu ausgelegt ist, eine von dem Netzwerk gesendete Paging-Nachricht für alle Endgeräte einer Gruppenidentität zu empfangen, wobei die Paging-Nachricht einen Zugriffsressourcenindex enthält, der verwendet wird, um eine dedizierte Zugriffsressource des Endgerätes und einen anfänglichen Zugriffszeitpunkt anzugeben, wann die dedizierte Zugriffsressource verwendet wird; und

die Empfangseinheit (901) ferner dazu ausgelegt ist, die dedizierte Zugriffsressource der Mitglieder der Gruppe und den anfänglichen Zugriffszeitpunkt zu empfangen, wann die dedizierte Zugriffsressource verwendet wird, wobei die dedizierte Zugriffsressource und der anfängliche Zugriffszeitpunkt durch eine Rundsendenachricht vom Netzwerk gesendet werden.

35. Endgerät gemäß Anspruch 32, wobei

die Empfangseinheit (901) ferner dazu ausgelegt ist, eine Vorkonfigurationsinformation zu empfangen, wobei die Vorkonfigurationsinformation die dedizierte Zugriffsressource der Mitglieder der Gruppe enthält; und

die Empfangseinheit (901) ferner dazu ausgelegt ist, eine vom Netzwerk gesendete Paging-Nachricht für alle Endgeräte der Gruppenidentität zu empfangen, wobei die Paging-Nachricht einen Zugriffsressourcenindex und/oder einen anfänglichen Zugriffszeitpunkt enthält, wann die dedizierte Zugriffsressource verwendet wird, und der Zugriffsressourcenindex verwendet wird, um eine dedizierte Zugriffsressource des Endgerätes anzugeben.

36. Endgerät gemäß Anspruch 33, 34 oder 35, das ferner Folgendes umfasst:

eine Berechnungseinheit (905), die dazu ausgelegt ist, eine Endgeräte-Zugriffszeit und eine von dem Endgerät verwendete Zugriffsressource gemäß der Sequenz des Endgerätes, die Information der dedizierten Zugriffsressource der Gruppe und den anfänglichen Zugriffszeitpunkt zu berechnen, wann die dedizierte Zugriffsressource verwendet wird.

## Revendications

1. Procédé d'accès à un réseau, effectué par un élément de réseau de communication, comprenant :

l'établissement (401) d'informations de distribution de séquence de groupe, les informations de distribution de séquence de groupe comprenant des informations de distribution de séquence de chaque identité de groupe, les informations de distribution de séquence comprenant une relation correspondante entre une séquence et une identité de terminal, et l'identité de groupe étant un identifiant d'un groupe de terminaux ;

l'envoi (403) des informations de distribution de séquence ou de la séquence à un terminal, de telle sorte que le terminal accède à un réseau en fonction d'un ordre de la séquence lors de la transmission de données ;

le procédé comprenant en outre :

l'envoi d'une séquence maximale distribuée Nmax et d'un pas d'ajustement de séquence k au terminal ;

l'ajustement de la séquence de chaque terminal de chaque groupe à : (S+k) mod Nmax+1 après chaque transmission de données, S représentant la séquence initiale de chaque terminal, mod représentant modulo.

2. Procédé selon la revendication 1, comprenant en outre :
la réception de l'identité de groupe envoyée depuis un serveur.

3. Procédé selon la revendication 1, comprenant en outre :

la réception de l'identité de groupe envoyée par le terminal ; et
la recherche de l'existence ou de l'absence d'une sauvegarde des informations de distribution de séquence de groupe correspondant à l'identité de groupe ;
l'établissement d'informations de distribution de séquence de groupe comprenant :
l'établissement des informations de distribution de séquence de groupe s'il ne s'agit pas des informations de distribution de séquence de groupe correspondant à l'identité de groupe.

4. Procédé selon la revendication 2 ou 3, comprenant en outre :
la réception d'un message d'information d'un réseau d'infrastructure qui identifie un groupe auquel appartient le terminal pendant une procédure d'enregistrement du terminal, le message d'information étant utilisé pour informer de la distribution de la séquence au terminal.

5. Procédé selon la revendication 2 ou 3, dans lequel l'identité de groupe correspond à de multiples séquences, et tous les terminaux d'une même cellule correspondent à une identité de groupe ; ou les terminaux avec un même type de service de transmission dans une même cellule correspondent à une même identité de groupe ; ou les terminaux avec un même type de service de transmission dans une même cellule correspondent à des identités de groupe différentes.

6. Procédé selon la revendication 2 ou 3, dans lequel l'envoi des informations de distribution de séquence ou de la séquence à un terminal comprend :

la réception d'informations de requête de séquence envoyées depuis le terminal ;
la recherche des informations de distribution de séquence de groupe en fonction d'une identité du groupe auquel appartenait le terminal portée par les informations de requête de séquence, afin de trouver des informations de distribution de séquence correspondant à l'identité du groupe auquel appartenait le terminal ;
l'envoi des informations de distribution de séquence recherchées ou de la séquence contenue dans les informations de distribution de séquence recherchées au terminal si les informations de distribution de séquence de groupe correspondant au terminal sont sauvegardées ;
l'ajout et la distribution d'une deuxième séquence au terminal, et l'établissement de deuxièmes informations de distribution de séquence de la deuxième séquence, et l'envoi des deuxièmes informations de distribution de séquence ou de la deuxième séquence au terminal s'il ne s'agit pas des informations de distribution de séquence de groupe correspondant au terminal.

7. Procédé selon la revendication 2 ou 3, dans lequel l'envoi des informations de distribution de séquence ou de la séquence à un terminal comprend :

la réception d'informations de requête de séquence envoyées depuis le terminal ;
la détermination d'une identité de groupe du terminal en fonction d'informations de type de service du terminal portées par les informations de requête de séquence ;
la recherche des informations de distribution de séquence de groupe en fonction de l'identité de groupe, afin de trouver des informations de distribution de séquence correspondant à l'identité du groupe auquel appartenait le terminal ;
l'envoi des informations de distribution de séquence recherchées ou d'une deuxième séquence contenue dans les informations de distribution de séquence recherchées au terminal si les informations de distribution de séquence de groupe correspondant au terminal sont sauvegardées ;
l'ajout et la distribution d'une deuxième séquence au terminal, et l'établissement de deuxièmes informations de distribution de séquence de la deuxième séquence, et l'envoi des deuxièmes informations de distribution de séquence établies ou de la deuxième séquence au terminal s'il ne s'agit pas des informations de distribution de séquence de groupe correspondant au terminal.

**8.** Procédé selon la revendication 6, dans lequel la réception des informations de requête de séquence envoyées depuis le terminal comprend :

la réception des informations de requête de séquence envoyées depuis le terminal par le biais d'une requête de connexion de contrôle de ressources radio (RRC CONNECTION REQUEST) ou de la réalisation d'un paramétrage de connexion de contrôle de ressources radio (RRC CONNECTION SETUP COMPLETE).

**9.** Procédé selon la revendication 1, dans lequel l'envoi des informations de distribution de séquence ou de la séquence au terminal comprend :

l'envoi des informations de distribution de séquence ou de la séquence portées par un message de paramétrage de connexion de contrôle de ressources radio (RRC CONNECTION SETUP), un message de reconfiguration de canal physique (PHYSICAL CHANNEL RECONFIGURATION), un message de reconfiguration de support radio (RADIO BEARER RECONFIGURATION) ou un en-tête MAC au terminal.

**10.** Procédé selon la revendication 2 ou 3, comprenant en outre :

l'envoi d'un message de radiomessagerie à tous les terminaux correspondant à l'identité de groupe, le message de radiomessagerie comprenant des informations d'accès de tous les membres du groupe, les informations d'accès comprenant une ressource d'accès dédiée de n'importe lequel de tous les membres du groupe et un point temporel d'accès initial de n'importe lequel de tous les membres du groupe auquel la ressource d'accès est utilisée.

**11.** Procédé selon la revendication 2 ou 3, comprenant en outre :

l'envoi d'un message de radiomessagerie à tous les terminaux correspondant à l'identité de groupe, un indice de ressource d'accès étant porté par le message de radiomessagerie et indiquant une ressource d'accès dédiée du terminal et un point temporel d'accès initial auquel la ressource d'accès dédiée est utilisée ;
l'envoi d'une ressource d'accès dédiée des membres du groupe et d'un point temporel d'accès initial auquel la ressource d'accès dédiée est utilisée au terminal par le biais d'un message de radiodiffusion.

**12.** Procédé selon la revendication 2 ou 3, comprenant en outre :

l'envoi d'informations de préconfiguration lors de l'envoi des informations de distribution de séquence ou de la séquence au terminal, les informations de préconfiguration portant une ressource d'accès dédiée des membres du groupe ;
l'envoi d'un message de radiomessagerie à tous les terminaux correspondant à l'identité de groupe, le message de radiomessagerie portant un indice de ressource d'accès et/ou un point temporel d'accès initial auquel la ressource d'accès dédiée est utilisée, l'indice de ressource d'accès étant utilisé pour indiquer une ressource d'accès dédiée du terminal.

**13.** Procédé selon la revendication 1, comprenant en outre :

la récupération de la séquence correspondant au terminal dans une période de transmission arbitraire, si le terminal n'arrive pas à accéder ou n'arrive pas à transmettre des données pendant les temps prédéfinis de périodes de transmission ;
la distribution de la séquence récupérée aux terminaux dont la séquence est supérieure à la séquence récupérée ou aux terminaux qui sont nouvellement entrés dans la cellule pendant une période de transmission suivant la période de transmission arbitraire.

**14.** Procédé d'accès à un réseau, effectué par un terminal, comprenant :

la réception (501) d'informations de distribution de séquence envoyées depuis un réseau ou d'une séquence distribuée à un terminal par le réseau, les informations de distribution de séquence comprenant une relation correspondante entre une séquence et une identité de terminal, les informations de distribution de séquence étant des informations de distribution de séquence dans des informations de distribution de séquence de groupe et les informations de distribution de séquence de groupe comprenant des informations de distribution de séquence de chaque identité de groupe, et l'identité de groupe étant un identifiant d'un groupe de terminaux ;
l'accès (503) au réseau en fonction d'un ordre de la séquence selon laquelle le terminal transmet des données ;
le procédé comprenant en outre :

la réception d'une séquence maximale distribuée Nmax et d'un pas d'ajustement de séquence k envoyés depuis le réseau ;

l'ajustement de la séquence du terminal après chaque transmission de données à : (S+k) mod Nmax+1, S représentant la séquence initiale de chaque terminal, mod représentant modulo.

15. Procédé selon la revendication 14, comprenant en outre :

l'envoi d'informations de requête de séquence au réseau par le terminal, les informations de requête de séquence portant une identité du groupe auquel appartenait le terminal ou des informations de type de service ; la réception, par le terminal, d'informations de distribution de séquence correspondant à l'identité du groupe auquel appartenait le terminal qui sont obtenues pendant une recherche des informations de distribution de séquence de groupe en fonction de l'identité de groupe ou d'informations de type de service envoyées depuis le réseau.

16. Procédé selon la revendication 15, dans lequel l'envoi d'informations de requête de séquence au réseau par le terminal comprend : l'envoi d'une requête de connexion de contrôle de ressources radio (RRC CONNECTION REQUEST) au réseau par le terminal, la requête de connexion de contrôle de ressources radio portant des informations de requête de séquence, les informations de requête de séquence comprenant une identité de groupe.

17. Procédé selon la revendication 14, dans lequel l'accès au réseau en fonction de l'ordre de la séquence selon laquelle le terminal transmet des données comprend :

la réception d'un message de radiomessagerie envoyé depuis le réseau pour tous les terminaux d'une identité de groupe, le message de radiomessagerie comprenant des informations d'accès de tous les membres du groupe, les informations d'accès comprennent une ressource d'accès dédiée des membres du groupe et un point temporel d'accès initial auquel la ressource d'accès dédiée est utilisée ; l'accès au réseau par l'utilisation des informations d'accès dans l'ordre de la séquence par tous les terminaux du groupe.

18. Procédé selon la revendication 14, dans lequel l'accès au réseau en fonction de l'ordre de la séquence selon laquelle le terminal transmet les données comprend :

la réception d'un message de radiomessagerie envoyé depuis le réseau pour tous les terminaux d'une identité de groupe, le message de radiomessagerie portant un indice de ressource d'accès, qui est utilisé pour indiquer une ressource d'accès dédiée du terminal et un point temporel d'accès initial auquel la ressource d'accès dédiée est utilisée ; la réception de la ressource d'accès dédiée des membres du groupe et du point temporel d'accès initial auquel la ressource d'accès dédiée est utilisée, la ressource d'accès dédiée et le point temporel d'accès initial étant envoyés depuis le réseau par le biais d'un message de radiodiffusion ; l'accès au réseau dans l'ordre de la séquence par tous les terminaux du groupe par l'utilisation de la ressource d'accès dédiée et du point temporel d'accès initial auquel la ressource d'accès dédiée est utilisée.

19. Procédé selon la revendication 14, comprenant en outre :

la réception d'informations de préconfiguration, les informations de préconfiguration portant une ressource d'accès dédiée du membre d'un groupe ; la réception d'un message de radiomessagerie envoyé depuis le réseau pour tous les terminaux de l'identité de groupe, le message de radiomessagerie portant un indice de ressource d'accès et un point temporel d'accès initial auquel la ressource d'accès dédiée est utilisée, l'indice de ressource d'accès est utilisé pour indiquer une ressource d'accès dédiée du terminal.

20. Procédé selon la revendication 17, 18 ou 19, comprenant en outre : le calcul d'un temps d'accès de terminal et d'une ressource d'accès utilisée par le terminal après que le terminal a reçu le message de radiomessagerie, en fonction de la séquence du terminal, des informations de ressource d'accès dédiée du groupe et du point temporel d'accès initial auquel la ressource d'accès dédiée est utilisée.

21. Procédé selon la revendication 20, dans lequel le calcul d'un temps d'accès de terminal et d'une ressource d'accès utilisée par le terminal comprend :

le calcul de chacune d'opportunités d'accès en fonction des canaux d'accès, des créneaux d'accès et des séquences de signature, N, M et n étant des entiers positifs, la ressource d'accès dédiée configurée pour le groupe étant définie pour comporter N canaux d'accès, le n$^{\text{ième}}$ canal d'accès correspondant étant défini pour comporter Kn créneaux d'accès disponibles, et chaque créneau d'accès dans le n$^{\text{ième}}$ canal d'accès correspondant étant défini pour comporter Mn signatures disponibles ;

l'agencement des opportunités d'accès en fonction de l'ordre des créneaux d'accès.

**22.** Procédé selon la revendication 20, dans lequel le calcul d'un temps d'accès de terminal et d'une ressource d'accès utilisée par le terminal comprend : le calcul du temps d'accès du terminal et de l'opportunité d'accès du terminal ; quand il y a k opportunités d'accès dans un laps de temps T, le temps d'accès t est calculé selon la formule suivante :

$$ t = Td\acute{e}but + plancher \frac{SEQn}{k} * T\ ; $$

la ressource d'accès utilisée par le terminal est obtenue en calculant l'opportunité d'accès, l'opportunité d'accès est calculée selon la formule suivante :

$$ s = 1 + SEQn \bmod k\ ; $$

où t représente le temps d'accès du terminal, s représente l'opportunité d'accès du terminal, Tdébut représente le point temporel d'accès initial, plancher représente l'opération d'arrondi par défaut, SEQn représente la n$^{\text{ième}}$ séquence distribuée au terminal par le réseau, mod représente modulo, et SEQn est un entier qui est supérieur ou égal à zéro.

**23.** Procédé selon la revendication 14, comprenant en outre :
la récupération de la séquence correspondante du terminal par le réseau dans une période de transmission arbitraire, si un terminal dans la cellule n'arrive pas à accéder dans des temps prédéfinis d'une période de transmission.

**24.** Procédé selon la revendication 14, comprenant en outre :

l'actualisation de la séquence si le terminal a sauvegardé la séquence, après que le terminal a reçu les informations de distribution de séquence envoyées depuis le réseau ou le réseau a distribué la séquence au terminal ;
la réception et la sauvegarde de la séquence envoyée depuis le réseau, si le terminal n'a pas sauvegardé la séquence.

**25.** Élément de réseau de communication, comprenant :

une unité d'établissement (701), configurée pour établir des informations de distribution de séquence de groupe, les informations de distribution de séquence de groupe comprenant des informations de distribution de séquence de chaque identité de groupe, les informations de distribution de séquence comprenant une relation correspondante entre une séquence et une identité de terminal, et l'identité de groupe étant un identifiant d'un groupe de terminaux ; et
une unité d'envoi (703), configurée pour envoyer les informations de distribution de séquence ou la séquence à un terminal, de telle sorte que le terminal accède au réseau en fonction d'un ordre de la séquence lors de la transmission de données ;
l'unité d'envoi (703) étant également configurée pour envoyer une séquence maximale distribuée Nmax et un pas d'ajustement de séquence k au terminal ;
l'élément de réseau de communication comprenant en outre :
une unité d'ajustement (713), configurée pour ajuster la séquence de chaque terminal de chaque groupe à :
(S+k) mod Nmax+1 après chaque transmission de données, S représentant la séquence initiale de chaque terminal, mod représentant modulo.

**26.** Élément de réseau de communication selon la revendication 25, comprenant en outre :
une unité de distribution (702), configurée pour distribuer la séquence à des terminaux.

**27.** Élément de réseau de communication selon la revendication 26, comprenant en outre :

une unité de réception (705), configurée pour recevoir l'identité du groupe envoyée depuis un serveur ;
l'unité de distribution (702) étant également configurée pour distribuer la séquence au terminal correspondant à l'identité de groupe en fonction de l'identité de groupe.

28. Élément de réseau de communication selon la revendication 27, comprenant en outre :

une unité de recherche (707), configurée pour chercher si les informations de distribution de séquence de groupe correspondant à l'identité de groupe sont sauvegardées ;
l'unité d'établissement (701) étant également configurée pour déterminer s'il faut établir des informations de distribution de séquence de groupe en fonction d'un résultat de recherche de l'unité de recherche (707).

29. Élément de réseau de communication selon la revendication 27, comprenant en outre :
une unité de radiomessagerie (711), configurée pour envoyer un message de radiomessagerie à tous les terminaux correspondant à l'identité de groupe, le message de radiomessagerie comprenant les informations d'accès de tous les membres du groupe, les informations d'accès comprennent une ressource d'accès dédiée des membres du groupe et un point temporel d'accès initial auquel la ressource d'accès dédiée est utilisée.

30. Élément de réseau de communication selon la revendication 27, comprenant en outre :

une unité de radiomessagerie (711), configurée pour envoyer un message de radiomessagerie à tous les terminaux correspondant à l'identité de groupe, le message de radiomessagerie portant un indice de ressource d'accès qui est utilisé pour indiquer une ressource d'accès dédiée du terminal et un point temporel d'accès initial auquel la ressource d'accès dédiée est utilisée ;
une unité de radiodiffusion (712), configurée pour envoyer au terminal par le biais d'un message de radiodiffusion avec la ressource d'accès dédiée des membres du groupe et le point temporel d'accès initial auquel la ressource d'accès dédiée est utilisée.

31. Élément de réseau de communication selon la revendication 27,
l'unité d'envoi (703) étant également configurée pour envoyer des informations de préconfiguration, les informations de préconfiguration portant la ressource d'accès dédiée des membres du groupe ;
l'élément de réseau de communication comprenant en outre :
une unité de radiomessagerie (711), configurée pour envoyer un message de radiomessagerie à tous les terminaux correspondant à l'identité de groupe, le message de radiomessagerie portant un indice de ressource d'accès et/ou un point temporel d'accès initial auquel la ressource d'accès dédiée est utilisée, l'indice de ressource d'accès est utilisé pour indiquer une ressource d'accès dédiée du terminal.

32. Terminal, comprenant :

une unité de réception (901), configurée pour recevoir des informations de distribution de séquence envoyées depuis le réseau ou une séquence distribuée au terminal par le réseau, les informations de distribution de séquence comprenant une relation correspondante entre une séquence et une identité de terminal, les informations de distribution de séquence étant des informations de distribution de séquence dans des informations de distribution de séquence de groupe et les informations de distribution de séquence de groupe comprenant des informations de distribution de séquence de chaque identité de groupe, et l'identité de groupe étant un identifiant d'un groupe de terminaux ; et
une unité d'accès (903), configurée pour accéder au réseau en fonction de l'ordre de la séquence selon laquelle le terminal transmet des données ;
dans lequel l'unité de réception (901) est également configurée pour recevoir une séquence maximale distribuée Nmax et un pas d'ajustement de séquence k envoyés depuis le réseau ;
le terminal comprend en outre :
une unité d'ajustement (913), configurée pour ajuster la séquence du terminal après chaque transmission de données à : (S+k) mod Nmax+1, S représentant la séquence initiale de chaque terminal, mod représentant modulo.

33. Terminal selon la revendication 32, dans lequel
l'unité de réception (901) est également configurée pour recevoir un message de radiomessagerie envoyé depuis le réseau pour tous les terminaux d'une identité de groupe, le message de radiomessagerie comprenant des informations d'accès de tous les membres d'un groupe, et les informations d'accès comprenant une ressource d'accès dédiée des membres du groupe et un point temporel d'accès initial auquel la ressource d'accès dédiée est utilisée.

34. Terminal selon la revendication 32, dans lequel
l'unité de réception (901) est également configurée pour recevoir un message de radiomessagerie envoyé depuis le réseau pour tous les terminaux de l'identité de groupe, le message de radiomessagerie portant un indice de ressource d'accès, qui est utilisé pour indiquer une ressource d'accès dédiée du terminal et un point temporel d'accès initial auquel la ressource d'accès est utilisée ; et
l'unité de réception (901) est également configurée pour recevoir la ressource d'accès dédiée des membres du groupe et le point temporel d'accès initial auquel la ressource d'accès dédiée et utilisée, la ressource d'accès dédiée et le point temporel d'accès initial étant envoyés depuis le réseau par le biais d'un message de radiodiffusion.

35. Terminal selon la revendication 32, dans lequel
l'unité de réception (901) est également configurée pour recevoir des informations de préconfiguration, les informations de préconfiguration portant une ressource d'accès dédiée du membre du groupe ; et
l'unité de réception (901) est également configurée pour recevoir un message de radiomessagerie envoyé depuis le réseau pour tous les terminaux de l'identité de groupe, le message de radiomessagerie portant un indice de ressource d'accès et/ou un point temporel d'accès initial auquel la ressource d'accès dédiée est utilisée, et l'indice de ressource d'accès étant utilisé pour indiquer une ressource d'accès dédiée du terminal.

36. Terminal selon la revendication 33, 34 ou 35, comprenant en outre :
une unité de calcul (905), configurée pour calculer un temps d'accès de terminal et une ressource d'accès utilisée par le terminal en fonction de la séquence du terminal, des informations de ressource d'accès dédiée du groupe et du point temporel d'accès initial auquel la ressource d'accès dédiée est utilisée.s

Figure 1

Figure 2

Figure 3

Start

Establishing sequence distribution information, wherein the sequence distribution information includes a corresponding relationship between the sequence and the device identity — 401

Sending the sequence distribution information or sequence to a terminal, so that the terminal accesses to the network according to the order of the sequence when reporting data — 403

End

Figure 4

Start

The terminal receives a sequence distribution information sent by the network or a sequence distributed to the terminal by the network, wherein the sequence distribution information includes a corresponding relationship between the sequence and the device identity

501

The terminal accesses to the network according to the order of the sequence when the terminal is reporting data

503

End

Figure 5

| Terminal | Communication network element | Core network | Serve |
|---|---|---|---|

601，group information

602，group information

603，establish sequence distribution information

604，initiate random access, carry sequence request

605，search if there is corresponding sequence distribution information, if not, distribute sequence and establish sequence distribution information

606，sequence distribution information

607，paging message

608，calculate initial access time and used access resource

609，initiate access

Figure 6

70

| | 701 |
|---|---|

Establishing unit

703

Sending unit

Communication network element

Figure 7

70

Distributing unit — Establishing unit

702

704

Configuring unit — Sending unit

701

703

706

Judging unit — Receiving unit

705

710

Detemining unit — Searching unit

707

712

Broadcasting unit — Paging unit

711

714

Retrieving unit — Adjusting unit

713

Communication network element

Figure 8

90

Figure 9

90

Figure 10

distribute available access resources as the time-frequency/time-code two-dimensional to the group

Figure 11

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2008025247 A1
- WO 2005001619 A2